# EUROPÄISCHE PATENTSCHRIFT

(11) **EP 3 514 198 B1**
(45) Veröffentlichungstag und Bekanntmachung des Hinweises auf die Patenterteilung: **09.06.2021**
(21) Anmeldenummer: 19151414.0
(22) Anmeldetag: 11.01.2019
(51) Int. Cl.: C08J 5/04

(54) **HR GLASFASERN IN SCHWINGBAUTEILEN**
HR GLASS FIBRES IN PIVOTING COMPONENTS
FIBRES DE VERRE HR DANS DES COMPOSANTS OSCILLANTS

(30) Priorität: 15.01.2018 EP 18151577
(43) Veröffentlichungstag der Anmeldung: 24.07.2019
(73) Patentinhaber: LANXESS Deutschland GmbH, 50569 Köln (DE)
(72) Erfinder: JOACHIMI, Detlev, 47800 Krefeld (DE); LINDER, Thomas, 51067 Köln (DE); THEILER, Stefan, 41470 Neuss (DE); KÜBLER, Michael, 74199 Untergruppenbach (DE); BRANDT, Marcel, 51377 Leverkusen (DE)

(56) Entgegenhaltungen:
- EP-A1- 2 719 729
- DATABASE WPI Week 199933 1999 Thomson Scientific, London, GB; AN 1999-389247 XP002780842, & JP H11 152062 A (IDEMITSU PETROCHEM CO LTD) 8. Juni 1999 (1999-06-08)
- DATABASE WPI Week 201402 2013 Thomson Scientific, London, GB; AN 2013-T68511 XP002780843, & CN 103 214 834 A (ANHUI JIANGHUAI AUTOMOTIVE CO LTD) 24. Juli 2013 (2013-07-24)

## Beschreibung

Die vorliegende Erfindung betrifft die Verwendung von HR Glasfasern zur Verbesserung der Betriebsfestigkeit Polyamid 6 (PA 6) basierter Schwingbauteile, vorzugsweise solcher in Kraftfahrzeugen, insbesondere solcher Schwingbauteile im Motorraum von Kraftfahrzeugen mit Verbrennungsmotor.

Die Schwingfestigkeit ist ein Begriff aus der Werkstoffkunde und bezeichnet das Verformungs- und Versagensverhalten von Werkstoffen bei zyklischer Beanspruchung. Erzeugnisse, die über längere Zeiträume einer zyklischen Beanspruchung ausgesetzt sind, werden als Schwingbauteile bezeichnet. Die an solchen Schwingbauteilen zu bestimmende Schwingfestigkeit ist nicht mit einer Schwingungsabsorption zu verwechseln. Vielmehr untersucht man die Schwingfestigkeit von Bauteilen oder Verbindungselementen, beispielsweise Schrauben, im sogenannten Wöhlerversuch, aus dessen Ergebnissen die sogenannte Wöhlerkurve resultiert. Die Kriterien für eine betriebsfeste Bauteilbemessung sind das Erreichen einer geforderten Lebensdauer, die Zuverlässigkeit der Komponenten einer Konstruktion bzw. des gesamten Systems und die Sicherheit, dass ein Bauteil nicht vor Erreichen der Bemessungslebensdauer ausfällt.

Die Wöhlerkurve wird in die Bereiche Kurzzeitschwingfestigkeit (elastoplastische Beanspruchungen mit größerem plastischen Anteil, mit einer Lebensdauer von bis zu 5•10⁴ Schwingspielen), Zeitfestigkeit (elastoplastische Beanspruchungen, mit einer Lebensdauer im Bereich von 5•10⁴ bis 5•10⁶ Schwingspielen) und die sogenannte Dauerfestigkeit (makroskopisch elastische, mikroskopisch plastische Beanspruchungen bei Lebensdauern größer als 5•10⁶ Schwingspielen) unterteilt (siehe: C.M. Sonsino, MP Materialprüfung, 50 (2008), Heft 1 / 2, S. 77 - 90, Carl-Hanser-Verlag).

Zeitfestigkeit bzw. Betriebsfestigkeit sowie Dauerfestigkeit haben einen großen Einfluss auf die Auslegung, die Materialauswahl sowie die Dimensionierung von Schwingbauteilen. Für die sichere Funktion eines Schwingbauteils müssen sämtliche auf dieses in der Praxis und über dessen gesamte Lebenszeit hinweg einwirkende Beanspruchungen - wenn möglich - ohne dauerhafte Beschädigung durch dieses ertragen werden.

Im Gegensatz zu einer statischen Belastung, zu deren Ermittlung Werkstoffkennwerte wie die Streckgrenze oder die Zugfestigkeit in einem Zugversuch bestimmt werden, wird zur Ermittlung der dynamischer Beanspruchung das zu untersuchende Schwingbauteil Lastwechseln unterzogen. Dabei sinkt die zulässige Spannung in dem zur Herstellung des Schwingbauteils eingesetzten Werkstoff: Ein Bruch kann eintreten, auch wenn die Zugfestigkeit noch nicht erreicht wurde und oftmals sogar, ohne dass der linear-elastische Bereich des Spannungs-Dehnungs-Diagramms verlassen wurde. Eine Schraube, die z. B. zur Befestigung eines Auspuffs an einem Fahrzeug dient, kann wegen der schwingenden Belastung der Fahrzeugbewegung brechen, obwohl die eigentliche Dehngrenze nicht erreicht wurde. Dieser Effekt kann durch Korrosion und/oder Temperaturänderungen noch verstärkt werden.

Dynamische Beanspruchungen werden in der Regel als Schwingungen aufgefasst. Für die Konstruktion und Dimensionierung eines Bauteils, welches einer schwingenden Belastung unterliegt, muss bekannt sein, wie viele Lastwechsel es überlebt, bevor es zum Bruch kommt. Diese Eigenschaft wird im Wöhlerversuch untersucht, der nach lSO13003:2003 genormt ist. Hierfür werden die Versuchskörper mit Hochfrequenzpulsatoren zyklisch, meist unter einer sinusförmigen Beanspruchungs-ZeitFunktion, belastet. Die Beanspruchung kann hierbei je nach Versuchsdurchführung durch Zug-/Druckbelastung, Biegung, Torsion oder Querkraftschub entstehen. Lastamplituden sowie das Spannungsverhältnis aus Unterlast zu Oberlast (der so genannte Ruhegrad) sind konstant. Der Versuch läuft, bis ein definiertes Versagen (Bruch, Anriss) eintritt, oder eine festgelegte Grenzschwingspielzahl erreicht wird.

Die maximale Lastwechselanzahl für eine bestimmte Lastamplitude kann aus dem Wöhlerdiagramm abgelesen werden. Sie hängt von Werkstoffeigenschaften (zyklisch verfestigend / zyklisch entfestigend), der Kraft beziehungsweise der daraus resultierenden Spannung und der Art der Belastung (schwellende Druckbelastung, schwellende Zugbelastung oder wechselnde Belastung) ab. Bei gleicher Auslenkungsamplitude schädigt eine wechselnde Belastung ein Bauteil am stärksten.

Zur Ermittlung der Wöhlerlinie werden verschiedene Versuchskörper auf verschiedenen Lasthorizonten geprüft. Jeder Wöhlerversuch läuft, bis ein definiertes Versagen der Probe (Bruch, Anriss) eintritt, oder eine festgelegte Anzahl Schwingungen (auch Grenzschwingspielzahl) überstanden ist. Für jeden Wöhlerversuch sind Mittelspannung, Oberspannung und Unterspannung der zyklischen Beanspruchung konstant. Zwischen den Versuchen derselben Wöhlerlinie wird entweder nur die Mittelspannung oder nur das Verhältnis zwischen Ober- und Unterspannung variiert.

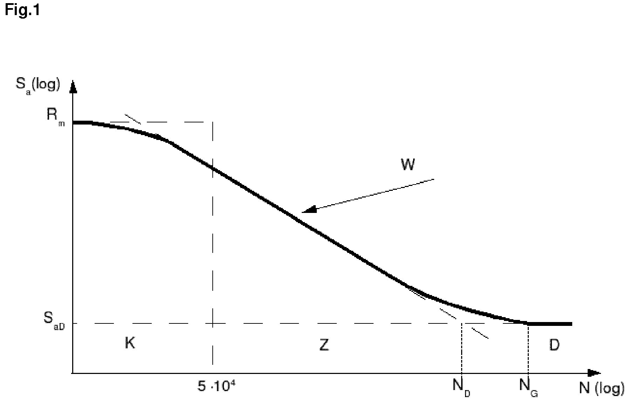

Üblicherweise wird im Wöhlerdiagramm (**Fig.1**) die Nennspannungsamplitude Sₐ linear oder logarithmisch über der logarithmisch dargestellten, ertragbaren Schwingspielzahl aufgetragen. Den sich ergebenden Kurvenzug nennt man Wöhlerkurve. Weil der Bereich der Zeitfestigkeit in doppeltlogarithmischer Darstellung eine Gerade darstellt, hat sich auch der Begriff Wöhlerlinie etabliert.

Betrachtet man eine beispielhafte Wöhlerkurve in **Fig.1** (Quelle: https://de.wikipedia.org/wiki/Schwingfestigkeit), so fallen drei unterschiedliche Bereiche des Graphen auf, die als Kurzzeitfestigkeit **K,** Zeitfestigkeit **Z** und Dauerfestigkeit **D** bezeichnet werden:
**K** ist im Beispiel der **Fig.1** der Bereich der Kurzzeitfestigkeit unterhalb von ca. 10⁴ bis 10⁵ Schwingspielen. Diese Art der Ermüdung tritt bei hohen plastischen Dehnamplituden auf, die zu frühem Versagen führen. Bei einer Belastung, die innerhalb von einem Viertel Schwingspiel zum Bruch führt, spricht man von der statischen Festigkeit, die auch im Zugversuch bestimmt wird. Für technische Anwendungen hat der Bereich der Kurzzeitfestigkeit lediglich eine geringe Bedeutung.

**Z** ist im Beispiel der **Fig.1** der Bereich der Zeitfestigkeit bzw. Zeitschwingfestigkeit, auch Betriebsfestigkeit zwischen 10⁴ und materialabhängig etwa 2•10⁶ Schwingspielen, in dem die Wöhlerkurve bei doppellogarithmischer Darstellung nahezu gerade verläuft.

**D** ist im Beispiel der **Fig.1** der anschließende Bereich der sogenannten Dauerfestigkeit bzw. Dauerschwingfestigkeit. Umstritten ist aber, ob es überhaupt eine wirkliche Dauerfestigkeit gibt, oder ob es bei sehr hohen Lastspielzahlen auch bei sehr geringen Belastungen zum Versagen kommt. Da eine echte Dauerfestigkeit nicht existiert, wird meist die ertragbare Amplitude bei 10⁸ Lastwechseln als Dauerfestigkeit bezeichnet. Unterliegt ein Bauteil ständiger Korrosion oder stark erhöhten Temperaturen, so kann nicht mehr mit einer Dauerfestigkeit gerechnet werden.

Oftmals wird ein Bauteil oder eine Baugruppe nicht dauerfest, sondern betriebsfest ausgelegt. Dabei befindet man sich im Bereich der Zeitfestigkeit, wo zwischen der Zugfestigkeit und der Dauerfestigkeit nur eine bestimmte Anzahl an Lastwechseln ertragen wird. Die Zahl der ertragenen Schwingspiele eines Bauteils unter Betriebsbelastung (variable Belastungsamplituden) bis zum Ausfall kann im Rahmen statistischer Genauigkeit mit Hilfe der Wöhlerlinie vorausgesagt werden. Dazu verwendet man die Methoden der linearen Schadensakkumulation nach *Palmgren, Langer und Miner.* Gleichzeitig werden intensiv experimentelle Erprobungen eingesetzt, um die rechnerischen Ergebnisse zu verifizieren. Betriebsfestigkeit wird heute in nahezu allen Bereichen der Technik zum Zweck des Leichtbaus eingesetzt.

Bauteile, die nicht dauerfest, sondern betriebsfest sind, benötigen weniger Material und haben daher eine geringere Masse. Ein leichteres Fahrzeug hat beispielsweise einen geringeren Treibstoffverbrauch, eine leichtere Struktur und erlaubt eine höhere Nutzlast.

Gelegentlich dient die betriebsfeste Auslegung auch der Erfüllung der Funktion, denn dauerfeste Flugzeuge würden nicht fliegen können, weil sie zu schwer wären.

In die Betrachtung der Betriebsfestigkeit fließen in der Realität auch schlag- und stoßartige Belastungen sowie Umgebungsbedingungen wie Temperatur, Druck, Korrosion, Steinschläge, Niederschlag, Kriechen und Alterung des Materials. Normalerweise ist ein betriebsfestes Bauteil nur bis zu einer bestimmten Schwingungs- oder Schlagamplitude ausgelegt und darf nach dem Überschreiten dieser Grenzbelastung versagen. Idealerweise versagt ein sicherheitsrelevantes Bauteil lediglich durch Verformung und nicht durch Bruch, um eine Restsicherheit zu gewährleisten und ein Unfallrisiko zu verringern. So spielen Sonderereignisse wie Unfälle in der Erprobung von Bauteilen eine große Rolle, da diese Beanspruchungen vom betriebsfesten Bauteil schadensfrei ertragen werden müssen.

Die Streuung der Messergebnisse der Wöhlerversuche ist auffallend groß. Sie resultiert nur geringfügig aus Unzulänglichkeiten der Versuche, sondern vielmehr aus divergierenden Werkstoffeigenschaften innerhalb der Bauteile. Die Streuung der Messergebnisse gehorcht der Extremwerttheorie von *W. Weibull* und *E. J. Gumbel* und zwar der Verteilung der kleinsten Festigkeiten der Volumenelemente (Weibullverteilung). Aus der Extremwerttheorie folgt auch der statistische Größeneinfluss: Kleine Bauteile haben im Mittel eine größere Dauerfestigkeit als große von identischem Material. Im Rahmen der Untersuchungen zur vorliegenden Erfindung wurden deshalb alle Untersuchungen an Normprobekörpern in Form von Zugstäben gemäß EN ISO 527-2 in spritzfrischem Zustand durchgeführt.

Schwingfest auszulegende Bauteile finden sich überall dort, wo es zu zyklischer Beanspruchung kommt. Vorzugsweise seien aufgeführt:
- Luftführungen, insbesondere Ansaugmodule, Ladeluftsysteme, Ölkreislauf in Motoren, insbesondere Ölfiltergehäuse, Kühlkreislauf von Motoren, insbesondere Kühlwasserrohre, Ausgleichsbehälter, Pumpengehäuse und Flügelräder, ausgelöst durch pulsierenden Innendruck;
- Motoren, insbesondere Luftansaugrohre, Ölwannen, Motorlager, Getriebebrücken, ausgelöst durch Schwingungsanregung;
- Koppelstangen, Frontends, Elektronikhaltern, Batterieträgern, sowie diverse in Fahrzeugen positionierte Halterungen, ausgelöst durch Schwingungsanregung aufgrund unebener Fahrbahnen;
- Beschläge, insbesondere Möbelbeschläge, Türschlösser, Parkbremse, Sportartikel, ausgelöst durch wiederholte Bewegungen;
- Haushaltsgeräte, insbesondere Küchenmaschinen, Waschmaschinen, Trockner Staubsauger, Powertools, Bohrmaschinen, Bohrhammer etc., ausgelöst durch Schwingungsanregungen der diese Maschinen antreibenden Motoren.

So beschreibt DE 10 2008 004 335 A1 beispielsweise eine Schwingantriebsvorrichtung für einen Schäler, worin ein rotierendes Antriebselement direkt oder indirekt ein Schwingbauteil zu einer Schwingbewegung antreibt. DE 10 2012 021 872 A1 wiederum offenbart eine Vorrichtung zur Durchführung einer Rüttelprüfung eines Fahrzeugs, insbesondere eines Kraftfahrzeugs, umfassend eine Bodenplatte, einen auf der Bodenplatte abgestützten Schwingungserreger mit einem zu einer vertikalen Schwingung antreibbaren Schwingbauteil.

Ferner ist aus DE 10 2016 115 812 A1 ein Bohrhammer bekannt, worin ein Schwingbauteil mit einem Drehkörper verbunden ist, das in axialer Richtung durch Drehung des Drehkörpers schwingt. Power Tools (Angetriebene Werkzeuge) oder Impact Tools (Schlagwerkzeuge) mit eingebauten Schwingbauteilen sind aus EP 2 143 530 B1, EP 2 529 892 B1 und EP 2540448 B1 bekannt.

Aus JPH 11 152 062 A2 ist ein Kraftfahrzeug Frontend mit "exzellenten Vibrationseigenschaften" auf Basis eines mit 15 bis 50 Gew.-% Glasfasern gefüllten Thermoplasten bekannt, wobei die Glasfasern eine mittlere Länge von 1 bis 20mm aufweisen und als Thermoplast Polyolefin basierte Thermoplasten, Polycarbonat, Polyestercarbonat, Polyester, insbesondere Polyethylenterephthalat oder Polybutylenterephthalat, Polyamid, oder Mischungen der genannten Thermoplasten vorgeschlagen werden. Es findet sich jedoch keine Aussage zur Betriebsfestigkeit bzw. Schwingfestigkeit des Frontends. Eine dauerhaltbare und schwingfeste Verbindung zum Befestigen eines Fahrpedalmoduls an der Karosserie eines Kraftfahrzeugs ist aus DE 198 57 225 A1 bekannt.

Sinkende CO₂-Grenzwerte sowie steigende Kraftstoffpreise und Recycelbarkeit erfordern insbesondere in der Automobilindustrie seit geraumer Zeit Innovationen hinsichtlich der Effizienz der Fahrzeuge, eines reduzierten Kraftstoffverbrauches und der verwendeten Werkstoffe. Die Anwendung von Leichtbaukonzepten ist dabei eine kostengünstige Basismaßnahme, für die neue und optimierte Leichtbauwerkstoffe gefordert werden. Aus der Gruppe der Kunststoffe ist kurzglasfaserverstärktes Polyamid ein häufig eingesetzter Werkstoff.

Durch die Zugabe von Glasfasern zu Thermoplastwerkstoffen wird eine Steigerung der Steifigkeiten und Festigkeiten bei gleichzeitiger Verringerung der Kriechneigung erreicht. Die Massendichte erhöht sich durch Zusatz von Glasfasern im Vergleich zum reinen Thermoplastwerkstoff nur geringfügig und die kostengünstige Großserienfertigung im Spritzgussprozess, die eine große Gestaltungsfreiheit und ein hohes Maß an Funktionsintegration erlaubt, bleibt möglich. Chemische Modifikationen der Thermoplaste bewirken außerdem eine Optimierung chemischer, thermischer und mechanischer Eigenschaften des auf diese Weise erhältlichen Verbundwerkstoffes.

Aufgrund ihres breiten Einsatzspektrums werden als Thermoplast vorzugsweise Polyamide, insbesondere teilkristalline Polyamide, häufig als Werkstoffe zur Herstellung von Bauteilen eingesetzt, die während ihrer Lebensdauer hohen dynamischen Belastungen über einen längeren Zeitraum ausgesetzt sind. Das zyklisch-dynamische Versagen Polyamid basierter Erzeugnisse über einen längeren Zeitraum lässt sich generell durch geeignete Wahl von Additiven nicht verhindern, sondern nur zeitlich verzögern.

Ausgehend vom oben beschriebenen Stand der Technik bestand die Aufgabe der vorliegenden Erfindung darin, die Betriebsfestigkeit thermostabil ausgerüsteter Polyamid 6 basierter Schwingbauteile, vorzugsweise von Schwingbauteilen in Kraftfahrzeugen, durch die Bereitstellung optimierter Polyamidzusammensetzungen zu verbessern, wobei die Untersuchungen der Zusammensetzungen an gemäß ISO 294-3 mittels Spritzgießen hergestellter Prüfkörper in Form von Zugstäben des Typ 1A gemäß EN ISO 527-2 in spritzfrischem Zustand sich durch besonders hohe zyklisch-dynamische Dauerbelastbarkeit bei hohen Lastwechselzahlen und gleichzeitig hoher zulässiger Belastung durch Zugkräfte auszeichnet, indem im Wöhlerversuch bei einer Temperatur von 120°C mit einer Oberlast von 60 MPa mindestens eine Anzahl von Lastwechseln > 400•e^{0,11•Glasfasergehalt in Masse-%} erreicht wird, ohne dass Nachteile in der Thermostabilität der Schwingbauteile eintreten.

### ERFINDUNG

Die Lösung der Aufgabe und Gegenstand der vorliegenden Erfindung ist die Verwendung von Zusammensetzungen enthaltend auf
A) 100 Massenanteile Polyamid 6,
B) 30 bis 160 Massenanteile HR Glasfasern aus E-Glas mit einem mittleren Durchmesser im Bereich von 9,5 bis 10,5 µm (10 +/-0,5 µm) und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, und
C) 0,03 bis 0,2 Massenanteile wenigstens einer Metallverbindung der Metalle Cu, Fe, Ce oder Mn,
zur Steigerung der Betriebsfestigkeit von Schwingbauteilen, vorzugsweise von Schwingbauteilen in Kraftfahrzeugen, insbesondere von Schwingbauteilen im Motorraum von Kraftfahrzeugen mit Verbrennungsmotor, mit der Maßgabe,
dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und dass als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

Zur Klarstellung sei angemerkt, dass die Längen- und Durchmesserangaben zur Komponente B) im Rahmen der vorliegenden Erfindung an der Ausgangsfaser bestimmt wurden, wie sie zur Herstellung erfindungsgemäß einzusetzender Zusammensetzungen herangezogen werden. Insbesondere die Längen der Komponente B) können im Schwingbauteil infolge der Einwirkung mechanischer Kräfte beim Compoundieren, Spritzgießen, Blasformen oder Extrudieren zu kürzeren mittleren Längen hin verschoben sein. Zur Klarstellung sei ferner angemerkt, dass vom Rahmen der Erfindung alle aufgeführten, allgemeinen oder in Vorzugsbereichen genannten Definitionen und Parameter in beliebigen Kombinationen umfasst sind. Zitierte Normen gelten in der zum Anmeldetag der vorliegenden Anmeldung gültigen Fassung, sofern nicht anders angegeben.

### Begriffsbestimmungen

Die in der vorliegenden Beschreibung verwendeten Begriffe "über", "bei" oder "etwa" sollen bedeuten, dass der danach genannte Betrag oder Wert der konkrete Wert oder ein etwa gleicher Wert sein kann. Der Ausdruck soll vermitteln, dass ähnliche Werte zu erfindungsgemäß gleichwertigen Ergebnissen oder Effekten führen und von der Erfindung mit umfasst werden.

Thermostabil ausgerüstet bedeutet im Sinne der vorliegenden Erfindung der Zusatz der Komponente C) wodurch Schwingbauteile der vorliegenden Erfindung Temperaturen von bis zu 140°C über mindestens einen Zeitraum von 3000h unbeschadet überstehen.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA 6, so bedeutet dies, dass von einer α,ω- Aminocarbonsäure bzw. von dem davon abgeleiteten Lactam, im Falle des PA 6 also dem ε-Caprolactam, ausgegangen worden ist; im Übrigen sei verwiesen auf DIN EN ISO 16396-1:2015-05.

Die Zubereitung erfindungsgemäß einzusetzender Zusammensetzungen für die Herstellung von im Spritzguss, in der Extrusion oder zum Blasformen einzusetzender Formmassen erfolgt durch Mischen der einzelnen Komponenten A), B) und C) sowie gegebenenfalls weiterer Komponenten in wenigstens einem Mischaggregat, vorzugsweise einem Compounder, besonders bevorzugt einem gleichsinnig drehenden Zweiwellenextruder. Durch diesen Mischvorgang, auch als Compoundieren bezeichnet, werden als Zwischenprodukte Formmassen erhalten, die in Form von Pulvern, Granulaten oder in Strangform einer weiteren Verarbeitung zur Verfügung gestellt werden. Diese Formmassen - auch als thermoplastische Formmassen bezeichnet - können entweder ausschließlich aus den Komponenten A), B) und C) bestehen, oder ggf. weitere Komponenten enthalten.

### Bevorzugte Ausführungen der Erfindung

Vorzugsweise betrifft die vorliegende Erfindung die erfindungsgemäße Verwendung von Zusammensetzungen enthaltend auf
A) 100 Massenanteile Polyamid 6,
B) 30 bis 160 Massenanteile HR Glasfasern aus E-Glas mit einem mittleren Durchmesser im Bereich von 10 +/-0,5 µm und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt,
C) 0,03 bis 0,2 Massenanteile wenigstens einer Metallverbindung der Metalle Cu, Fe, Ce oder Mn, und
D) 0,05 bis 1,0 Massenanteile wenigstens eines Entformungsmittels,
mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

Vorzugsweise betrifft die vorliegende Erfindung die erfindungsgemäße Verwendung von Zusammensetzungen enthaltend auf
A) 100 Massenanteile Polyamid 6,
B) 30 bis 160 Massenanteile HR Glasfasern aus E-Glas mit einem mittleren Durchmesser im Bereich von 10 +/-0,5 µm und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt,
C) 0,03 bis 0,2 Massenanteile wenigstens einer Metallverbindung der Metalle Cu, Fe, Ce oder Mn, und
E) 0,01 bis 5,0 Massenanteile wenigstens eines Additivs aus der Gruppe UV-Stabilisatoren, Pigmente, Farbmittel, von B) unterschiedliche Füllstoffe und Nukleierungsmittel,
mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

Vorzugsweise betrifft die vorliegende Erfindung die erfindungsgemäße Verwendung von Zusammensetzungen enthaltend auf
A) 100 Massenanteile Polyamid 6,
B) 30 bis 160 Massenanteile HR Glasfasern aus E-Glas mit einem mittleren Durchmesser im Bereich von 10 +/-0,5 µm und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt,
C) 0,03 bis 0,2 Massenanteile wenigstens einer Metallverbindung der Metalle Cu, Fe, Ce oder Mn,
D) 0,05 bis 1,0 Massenanteile wenigstens eines Entformungsmittels, und
E) 0,01 bis 5,0 Massenanteile wenigstens eines Additivs aus der Gruppe UV-Stabilisatoren, Pigmente, Farbmittel, von B) unterschiedliche Füllstoffe und Nukleierungsmittel,
mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

Die Erfindung betrifft auch ein Verfahren zur Steigerung der Betriebsfestigkeit Polyamid 6 basierter Schwingbauteile, vorzugsweise von Schwingbauteilen in Kraftfahrzeugen, insbesondere von Schwingbauteilen im Motorraum von Kraftfahrzeugen, indem zu deren Herstellung Zusammensetzungen enthaltend auf
A) 100 Massenanteile Polyamid 6
B) 30 bis 160 Massenanteile HR Glasfasern aus E-Glas mit einem mittleren Durchmesser im Bereich von 10 +/-0,5 µm und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, und
C) 0,03 bis 0,2 Massenanteile wenigstens einer Metallverbindung der Metalle Cu, Fe, Ce oder Mn,
im Spritzguss, in der Extrusion oder beim Blasformen, insbesondere im Spritzguss, eingesetzt werden, mit der Maßgabe, dass die Zusammensetzungen nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

### Komponente A)

Vorzugsweise wird als Komponente A) Polyamid 6 mit einer relativen Lösungsviskosität in m-Kresol im Bereich von 2,0 bis 4,0 eingesetzt. Insbesondere bevorzugt wird Polyamid 6 mit einer relativen Lösungsviskosität in m-Kresol im Bereich von 2,3 - 3,1 eingesetzt.

Bei Verfahren zur Bestimmung der relativen Lösungsviskosität werden die Durchlaufzeiten eines gelösten Polymers durch ein Ubbelohde-Viskosimeter gemessen, um anschließend den Viskositätsunterschied zwischen Polymerlösung und seinem Lösungsmittel, hier m-Kresol (1%-ige Lösung), zu bestimmen. Anwendbare Normen sind DIN 51562; DIN EN ISO 1628 oder entsprechende Normen. Die Viskositätsmessung im Rahmen der vorliegenden Erfindung erfolgt in Schwefelsäure mit einem Ubbelohde-Viskosimeter nach DIN 51562 Teil 1, mit der Kapillare II bei 25 °C (± 0,02 °C).

Vorzugsweise weist das als Komponente A) einzusetzende Polyamid 6 35 bis 60 Milliequivalent Aminoendgruppen / 1 kg PA und 35 bis 60 Milliequivalent Säureendgruppen / 1 kg PA, besonders bevorzugt 35 bis 60 Milliequivalent Aminoendgruppen / 1 kg PA und 35 bis 55 Milliequivalent Säureendgruppen / 1 kg PA auf, wobei PA für Polyamid steht. Die Bestimmung der Aminoendgruppen erfolgte im Rahmen der vorliegenden Erfindung gemäß Methode: G.B. Taylor, J. Am. Chem. Soc. 69, 635, 1947**.** Als Komponente A) einzusetzendes Polyamid 6 [CAS Nr. 25038-54-4] ist beispielweise bei der Lanxess Deutschland GmbH, Köln unter der Bezeichnung Durethan® B29 erhältlich.

### Komponente B)

Vorzugsweise wird Komponente B) in Mengen im Bereich von 85 bis 160 Massenanteilen bezogen auf 100 Massenanteile der Komponente A) eingesetzt. Als Komponente B) werden HR (=hydrolysis resistant)Glasfasern [CAS Nr. 65997-17-3] aus E-Glas gemäß DIN 1259 eingesetzt. E-Glasfasern haben gemäß der Broschüre **Glasfasern, Herstellung und Eigenschaften, R&G Faserverbundwerkstoffe GmbH, Waldenbuch, Ausg. 01 2003** einen Gehalt an SiO₂ von 53-55%, Al₂O₃ von 14-15%, B₂O₃ 6-8%, CaO 17-22%, MgO<5%, K₂O/Na₂O<1%, wobei andere Quellen von diesen Werten etwas abweichen. In jedem Fall zeichnet sich E-Glas durch einen sehr niedrigen Alkaligehalt <1% Na₂O/K₂O aus. Weitere Charakteristika für E-Glas sind typischerweise eine Dichte im Bereich von 2,59 bis 2,62 kg/dm², eine Bruchdehnung im Bereich von 3,5 bis 4% sowie ein Elastizitätsmodul von 73 GPa. Vorzugsweise werden diese als Komponente B) einzusetzenden HR Glasfasern aus E-Glas in Kunststoffcompounds eingesetzt, die im Kontakt mit Glykol-Wasser Gemischen bei hohen Temperaturen stehen, wobei der Fachmann unter hohe Temperaturen in diesem Zusammenhang solche im Bereich von Kühlwasserbetriebstemperaturen von Verbrennungsmotoren, also im Bereich von 120 bis 135°C, versteht. Solche HR Glasfasern aus E-Glas weisen typischerweise eine Beschichtung/Schlichte auf. Insbesondere sind derartige HR Glasfasern mit einer Schlichte auf Basis eines Organosilans versehen, um die Hydrolysestabilität zu gewährleisten. Beispielhaft sind HR Glasfasern beschrieben in US 6,139,958**,** US 6,183,637**,** US 6,207,737**,** US 6,846,855**,** US 7,419,721 und US 7,732,047 deren Inhalt von der vorliegenden Anmeldung vollumfänglich umfasst wird.

Erfindungsgemäß als Komponente B) einzusetzende HR Glasfasern aus E-Glas sind dadurch charakterisiert, dass sie mit Polyamid 66 in einer Menge von 43 Massenanteilen bezogen auf 100 Masseteile Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

Insbesondere bevorzugt werden die Glasfasern Chopvantage® HP3610 (10 µm) der Firma PPG Industries, Ohio, oder CS 7997 der Lanxess Deutschland GmbH, oder E-glass fiber chopped T435TM (ECS10-3.0-T435TM) der Taishan Fiberglass Limited, oder DS1128-10N der Firma 3B Fibreglass eingesetzt.

### Komponente C)

Als Thermostabilisator enthalten erfindungsgemäß zu verwendende Zusammensetzungen als Komponente C) wenigstens eine Metallverbindung der Metalle Cu, Fe, Ce oder Mn. Vorzugsweise wird Komponente C) in Mengen im Bereich von 0,1 bis 0,2 Massenanteilen, besonders bevorzugt im Bereich von 0,15 bis 0,2 Massenanteilen, bezogen jeweils auf 100 Massenanteile der Komponente A) eingesetzt. Erfindungsgemäß bevorzugt sind Kupferverbindungen. Besonders bevorzugte Kupferverbindungen sind Kupferhalogenide. Insbesondere bevorzugt werden diese in Kombination mit wenigstens einem Alkalimetallhalogenid oder Erdalkalimetallhalogenid eingesetzt. Bevorzugte Alkalimetall- bzw. Erdalkalimetallhalogenide sind Kaliumbromid, Kaliumiodid, Natriumchlorid oder Calciumchlorid. Ganz besonders bevorzugt wird wenigstens Kupfer(l)iodid [CAS Nr. 7681-65-4] in Verbindung mit Kaliumiodid [CAS Nr. 7681-11-0] oder Kaliumbromid [CAS Nr. 7758-02-3] eingesetzt.

Bevorzugte Eisenverbindungen sind Eisenoxid, Eisenformiat oder Eisenoxalat.

Bevorzugte Cerverbindung ist Certetrahydroxid.

Bevorzugte Manganverbindung ist Manganchlorid.

### Komponente D)

Als Komponente D) einzusetzende Entformungsmittel sind vorzugsweise Esterderivate oder Amidderivate langkettiger Fettsäuren, insbesondere Ethylen-bis-stearylamid, Glyzerintristearat, Stearylstearat, Montanesterwachse, insbesondere Ester von Montansäuren mit Ethylenglycol sowie niedermolekulare Polyethylen- bzw. Polypropylenwachse in oxidierter und nicht-oxidierter Form oder verseifte Wachse, Verbindungen eines Kations und mindestens eines Anions einer aliphatischen Carbonsäure, wobei das Anion durch Deprotonierung der Carbonsäure erhalten wird, insbesondere Calciumstearat.

Bevorzugte Entformungsmittel sind in der Gruppe der Ester oder Amide gesättigter oder ungesättigter aliphatischer Carbonsäuren mit 8 bis 40 C-Atomen mit gesättigten aliphatischen Alkoholen oder Aminen mit 2 bis 40 C-Atomen enthalten. Als Entformungsmittel vorzugsweise einzusetzende Montanesterwachse, auch kurz als Montanwachse [CAS Nr. 8002-53-7] bezeichnet, sind laut Herstellerangaben Ester von Mischungen aus geradkettigen, gesättigten Carbonsäuren mit Kettenlängen im Bereich von 28 bis 32 C-Atomen mit multifunktionellen Alkoholen. Entsprechende Montanesterwachse werden beispielsweise von Clariant International Ltd. als Licowax® angeboten. Erfindungsgemäß insbesondere bevorzugt wird Licowax® E mit einer nach ISO 2114 zu bestimmenden Säurezahl im Bereich von 15 bis 20 mg KOH/g, oder eine Mischung von Wachsen, vorzugsweise Mischungen von Esterwachsen und Amidwachsen wie **in** EP 2 607 419 A1 beschrieben.

Vorzugsweise wird Komponente D) in Mengen im Bereich von 0,05 bis 1,0 Massenanteilen in Bezug auf 100 Massenanteile der Komponente A) eingesetzt.

### Komponente E)

In einer Ausführungsform der vorliegenden Erfindung können zusätzlich zu den Komponenten B), C) und D) oder alternativ zu C) und D) auf 100 Massenanteile der Komponente A) noch 0,01 bis 5 Massenanteile Additive als Komponente E) eingesetzt werden. Als Komponente E) einzusetzende Additive sind vorzugsweise UV-Stabilisatoren, Farbstoffe oder Pigmente, Nukleierungsmittel oder von B) verschiedene Füllstoffe.

Erfindungsgemäß als Additiv einzusetzende UV-Stabilisatoren sind vorzugsweise substituierte Resorcine, Salicylate, Benzotriazole oder Benzophenone.

Erfindungsgemäß als Additiv einzusetzende Farbstoffe oder Pigmente sind vorzugsweise Ruß, sowie organische Pigmente, besonders bevorzugt Phthalocyanine, Chinacridone, Perylene sowie Farbstoffe, besonders bevorzugt Nigrosin oder Anthrachinone, sowie andere Farbmittel.

Erfindungsgemäß als Additiv einzusetzende Nukleierungsmittel sind vorzugsweise Natrium- oder Calciumphenylphosphinat, Aluminiumoxid, Siliziumdioxid oder Talkum. Besonders bevorzugt wird als Nukleierungsmittel Talkum [CAS-Nr.14807-96-6] eingesetzt, insbesondere mikrokristallines Talkum mit einer nach DIN ISO 9277 zu bestimmenden BET-Oberfläche von 5 bis 25 m² • g⁻¹.

Erfindungsgemäß können auch weitere von B) unterschiedliche Füllstoffe enthalten sein. Bevorzugt wird wenigstens ein Füllstoff aus der Gruppe Kohlenstofffasern [CAS Nr. 7440-44-0], Glaskugeln, Voll- oder Hohlglaskugeln, insbesondere [CAS Nr. 65997-17-3], gemahlenes Glas, amorphe Kieselsäure [CAS Nr. 7631-86-9], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0] oder Montmorillonit [CAS Nr. 67479-91-8] eingesetzt.

Eine "Faser" im Sinne der vorliegenden Erfindung ist ein makroskopisch homogener Körper mit hohem Verhältnis von Länge zu seiner Querschnittsfläche. Der Faserquerschnitt kann eine beliebige Form sein, ist aber in der Regel rund oder oval.

Gemäß "http://de.wikipedia.org/wiki/Faser-Kunststoff-Verbund" unterscheidet man
- geschnittene Fasern, auch als Kurzfasern bezeichnet, mit einer mittleren Länge im Bereich von 0,1 bis 5 mm, vorzugsweise im Bereich von 3 bis 4,5 mm,
- Langfasern mit einer mittleren Länge im Bereich von 5 bis 50 mm und
- Endlosfasern mit einer mittleren Länge L > 50 mm.

Alternativ zur Längen- und Durchmesserbestimmung einer Einzelfaser der Komponente B) halbautomatisch anhand rasterelektronenmikroskopischer Bilder (REM) können Faserlängen der als Komponente E) einzusetzenden Füllstoffe auch durch Microfokus-Röntgen-Computertomographie (µ-CT) bestimmt werden; J. Kastner et. al., Quantitative Messung von Faserlängen und -verteilung in faserverstärkten Kunststoffteilen mittels µ-Röntgen-Computertomographie, DGZfP-Jahrestagung 2007 - Vortrag 47, Seiten 1 -8**.**

Die als Komponente E) einzusetzenden faserförmigen oder teilchenförmigen Füllstoffe sind in einer bevorzugten Ausführungsform zur besseren Verträglichkeit mit der Komponente A) mit geeigneten Oberflächenmodifizierungen, vorzugsweise mit Silanverbindungen enthaltenden Oberflächenmodifizierungen, versehen, wie sie zur Komponente B) oben beschrieben wurden. Querschnittsfläche bzw. Filament-Durchmesser der als Komponente E) einzusetzenden faserförmigen oder teilchenförmigen Füllstoffe können mittels wenigstens eines optischen Verfahrens gemäß DIN 65571 bestimmt werden. Optische Verfahren sind a) Lichtmikroskop und Mikrometerokular (Distanzmessung Zylinderdurchmesser), b) Lichtmikroskop und Digitalkamera mit anschließender Planimetrie (Querschnittsmessung), c) Laserinterferometrie und d) Projektion.

Alle Längen-, Breiten- oder Durchmesserangaben zu den unter Komponente E) gelisteten Füllstoffen sind gemittelte Angaben (d₅₀-Wert) und beziehen sich auf den Zustand vor einer Compoundierung. Bezüglich der d₅₀-Werte in dieser Anmeldung, ihrer Bestimmung und ihrer Bedeutung sei auf Chemie Ingenieur Technik 72, 273-276, 3/2000, Wiley-VCH Verlags GmbH, Weinheim, 2000 verwiesen, wonach der d₅₀-Wert diejenige Partikelgröße ist, unterhalb derer 50 % der Partikelmenge liegen (Medianwert).

Insbesondere bevorzugt werden als Additiv bzw. Farbstoff Ruß oder Nigrosin eingesetzt.

Im Rahmen der vorliegenden Erfindung enthalten die erfindungsgemäß einzusetzenden Zusammensetzungen nicht mehr als 10 Massenanteile Schlagzähmodifikator, oder nicht mehr als 10 Massenanteile Fließverbesserer, oder nicht mehr als 10 Massenanteile Flammschutzadditiv-jeweils bezogen auf 100 Massenanteile Polyamid 6.

Schlagzähmodifikatoren, auch als Elastomermodifikatoren bezeichnet, sind im Rahmen der vorliegenden Erfindung als Komponente F) vorzugsweise einzusetzende Copolymere, die bevorzugt aus mindestens zwei Monomeren aus der folgenden Reihe aufgebaut sind: Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente. Die Copolymere können kompatibilisierende Gruppen, bevorzugt Maleinsäureanhydrid oder Epoxid enthalten.

Fließverbesserer sind im Rahmen der vorliegenden Erfindung als Komponente G) einzusetzende polyhydrische Alkohole, vorzugsweise polyhydrische (mehrwertige) Alkohole mit einem Schmelzpunkt im Bereich von 150 bis 280°C, vorzugsweise 180 bis 260°C, wobei der Schmelzpunkt ein mit einem Differentialscanningkalorimeter (DSC) gemessener endothermer Peak (Schmelzpunkt) ist, wie er für die Messung des Schmelzpunkts oder des Erstarrungspunkts eines Polymers verwendet wird. Vorzugsweise handelt es sich bei dem polyhydrischen Alkohol um Pentaerythritol, Dipentaerythritol oder Trimethylolethan. Sie können in Kombination verwendet werden. Pentaerythritol und / oder Dipentaerythritol sind besonders bevorzugt, insbesondere Dipentaerythritol. Siehe hierzu auch EP 1,041,109 A2**,** deren Inhalt von der vorliegenden Anmeldung vollumfänglich umfasst wird.

Flammschutzadditive als Komponente H) sind im Rahmen der vorliegenden Erfindung mineralische Flammschutzmittel, stickstoffhaltige Flammschutzmittel oder phosphorhaltige Flammschutzmittel.

Stickstoffhaltige Flammschutzmittel sind im Rahmen der vorliegenden Erfindung die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, Melamincyanurat und Kondensationsprodukte des Melamins, insbesondere Melem, Melam, Melon bzw. höherkondensierte Verbindungen dieses Typs.

Anorganische stickstoffhaltige Verbindungen sind im Rahmen der vorliegenden Erfindung Ammoniumsalze.

Ferner umfasst der Begriff Flammschutzadditiv auch Salze aliphatischer und aromatischer Sulfonsäuren und mineralische Flammschutzadditive, insbesondere Aluminiumhydroxid, Ca-Mg-Carbonat-Hydrate (siehe hierzu DE-A4 236 122).

Außerdem sollen erfindungsgemäß einzusetzende Zusammensetzungen nicht mehr als 10 Massenanteile - bezogen auf 100 Massenanteile Polyamid 6 - Flammschutzadditiv enthalten, wobei es sich um Flammschutzmittelsynergisten aus der Gruppe der sauerstoff- stickstoff- oder schwefelhaltigen Metallverbindungen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen handelt.

Darüber hinaus sollen erfindungsgemäß einzusetzende Zusammensetzungen nicht mehr als 10 Massenanteile - bezogen auf 100 Massenanteile Polyamid 6 - Flammschutzadditiv enthalten, wobei es sich um zinkhaltige Verbindungen Zinkoxid, Zinkborat, Zinkstannat, Zinkhydroxystannat, Zinksulfid oder Zinknitrid, oder deren Mischungen handelt.

Ferner sollen erfindungsgemäß einzusetzende Zusammensetzungen nicht mehr als 10 Massenanteile - bezogen auf 100 Massenanteile Polyamid 6 - Flammschutzadditiv enthalten, wobei es sich um halogenhaltige Flammschutzmittel handelt. Vorzugsweise handelt es sich dabei um Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimontpentoxid, eingesetzt werden können.

Phosphorhaltige Flammschutzmittel umfassen organische Metallphosphinate, vorzugsweise Aluminium-tris(diethylphosphinat), Aluminiumphosphonat, roter Phosphor, anorganische Metallhypophosphite, insbesondere Aluminiumhypophosphit, Metallphosphonate insbesondere Calciumphosphonat, Derivate der 9,10-Dihydro-9-oxa-10-phosphaphenanthren-10-oxide (DOPO-Derivate), Resorcinol-bis-(diphenylphosphat) (RDP), einschließlich Oligomere sowie Bisphenol-A-bis-diphenylphosphat (BDP) einschließlich Oligomere, ferner Melaminpyrophosphat, Melaminpolyphosphat, Melaminpoly(aluminiumphosphat), Melamin-poly(zinkphosphat) oder Phenoxyphosphazenoligomere und deren Mischungen.

Ferner sollen erfindungsgemäß einzusetzende Zusammensetzungen nicht mehr als 10 Massenanteile - bezogen auf 100 Massenanteile Polyamid 6 - Flammschutzadditiv enthalten, wobei als Flammschutzadditiv Kohlebildner bezeichnet werden, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die vorliegende Erfindung betrifft vorzugsweise die erfindungsgemäße Verwendung von Zusammensetzungen enthaltend auf 100 Massenanteile A) PA 6, als Komponente B) 30 bis 160 Massenanteile HR-Glasfasern aus E-Glas mit einem mittleren Durchmesser im Bereich von 9,5 bis 10,5 µm und einer mittleren Länge im Bereich von 3 bis 4,5 mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, und als Komponente C) 0,03 bis 0,2 Massenanteile Kupfer(l)iodid/ Kaliumiodid, mit der Maßgabe dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

Die vorliegende Erfindung betrifft vorzugsweise die erfindungsgemäße Verwendung von Zusammensetzungen enthaltend auf 100 Massenanteile A) PA 6, als Komponente B) 30 bis 160 Massenanteile HR-Glasfasern aus E-Glas mit einem mittleren Durchmesser im Bereich von 9,5 bis 10,5 µm und einer mittleren Länge im Bereich von 3 bis 4,5 mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, als Komponente C) 0,03 bis 0,2 Massenanteile Kupfer(l)iodid/ Kaliumiodid, und als Komponente D) 0,05 bis 1,0 Massenanteile Montanesterwachs Licowax® E, mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

Die vorliegende Erfindung betrifft vorzugsweise die erfindungsgemäße Verwendung von Zusammensetzungen enthaltend auf 100 Massenanteile A) PA 6, als Komponente B) 30 bis 160 Massenanteile HR-Glasfasern aus E-Glas mit einem mittleren Durchmesser im Bereich von 9,5 bis 10,5 µm und einer mittleren Länge im Bereich von 3 bis 4,5 mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, als Komponente C) 0,03 bis 0,2 Massenanteile Kupfer(l)iodid/ Kaliumiodid, als Komponente D) 0,05 bis 1,0 Massenanteile Montanesterwachs Licowax® E, und als Komponente E) 0,01 bis 5 Massenanteile Ruß oder Nigrosin, mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

### Verfahren

Die Verarbeitung der erfindungsgemäß zu verwendenden Zusammensetzungen erfolgt in der Weise, dass man die einzelnen Komponenten vermischt, zu einer Formmasse compoundiert und in einem Spritzgussprozess, einem Blasformvorgang oder einer Extrusion, bevorzugt einem Spritzgussprozess, zum Schwingbauteil mit gewünschter Geometrie verarbeitet.

Vorzugsweise weisen die Zusammensetzungen unmittelbar vor der Verarbeitung, insbesondere vor dem Spritzguss, vor der Extrusion oder vor dem Blasformen, eine nach der Karl-Fischer-Methode gemäß DIN EN ISO 15512 zu bestimmende Restfeuchte <0,12 Gew.-% - bezogen auf 100 Gew.-% der fertigen Mischung - auf.

Vorzugsweise erfolgt das Mischen in wenigstens einem Mischaggregat. Vorzugsweise erfolgt das Mischen der Komponenten bei Temperaturen im Bereich von 220 bis 330°C durch gemeinsames Vermengen, Vermischen, Kneten, Extrudieren oder Verwalzen. Bevorzugte Mischaggregate sind auszuwählen aus Compounder, gleichläufigem Zweiwellenextruder oder Buss-Kneter. Es kann vorteilhaft sein, einzelne Komponenten vorzumischen. Als Compound werden Gemische aus Grundstoffen bezeichnet, denen zusätzlich Füllstoffe, Verstärkungsstoffe oder andere Additive beigemischt worden sind. Durch eine Compoundierung werden mindestens zwei Stoffe miteinander zu einer homogenen Mischung verbunden. Den Vorgang zum Herstellen eines Compounds nennt man Compoundierung.

Vorzugsweise wird in einem ersten Schritt wenigstens eine der Komponenten B) oder C), sowie gegebenenfalls wenigstens eine der Komponenten D) oder E), mit Komponente A) zu einer Vormischung vermischt. Bevorzugt wird dieser erste Schritt bei Temperaturen < 50°C in einem Mischaggregat durchgeführt, vorzugsweise in einem Wendelmischer, Doppelkonusmischer, Lödige-Mischer. Alternativ kann eine Vormischung auf einem gleichläufigen Zweiwellenextruder, Buss-Kneter oder Planetwalzenextruder bei einer Temperatur oberhalb des Schmelzpunktes von Komponente A) ( = 220°C ) vorteilhaft sein. Vorzugsweise sind die Mischaggregate mit einer Entgasungsfunktion ausgestattet.

Nach dem Mischen werden die erhaltenen Formmassen vorzugsweise als Strang ausgetragen, bis zur Granulierfähigkeit abgekühlt und granuliert. In einer Ausführungsform wird das erhaltene Granulat getrocknet, bevorzugt bei Temperaturen im Bereich von 70 bis 130°C, vorzugsweise im Trockenlufttrockner. Für die Weiterverarbeitung im Spritzguss wird die Restfeuchte auf einen Wert vorzugsweise kleiner als 0,12 Gew.-% eingestellt. Für Extrusionsverarbeitung, insbesondere im Blasformverfahren wird vorzugsweise eine Restfeuchte von maximal 0,06 Gew.-% eingehalten.

Die Verfahren des Spritzgusses, des Blasformens sowie der Extrusion thermoplastischer Formmassen sind dem Fachmann bekannt. Extrusions- und Spritzgussverfahren zur Verarbeitung der erfindungsgemäß zu verwendenden Zusammensetzungen werden bei Schmelzetemperaturen im Bereich von 240 bis 330°C, bevorzugt im Bereich von 260 bis 310°C, besonders bevorzugt im Bereich von 270 bis 300°C, sowie im Fall der Spritzgussverarbeitung bei Fülldrücken von maximal 2500 bar, bevorzugt bei Fülldrücken von maximal 2000 bar, besonders bevorzugt bei Fülldrücken von maximal 1500 bar und ganz besonders bevorzugt bei Fülldrücken von maximal 750 bar durchgeführt.

Die aus den erfindungsgemäß zu verwendenden Formmassen herzustellenden Schwingbauteile werden dann vorzugsweise in Kraftfahrzeugen, besonders bevorzugt im Motorraum von Verbrennungsmotoren von Kraftfahrzeugen, eingesetzt, wo eine hohe dynamische Belastungsfähigkeit erforderlich ist. Alternative Einsatzmöglichkeiten wären aber auch die Elektro-, Elektronik-, Telekommunikations-, Solar-, Informationstechnologie-, Computer-Industrie, im Haushalt, beim Sport, in der Medizin oder in der Unterhaltungsindustrie. Bevorzugt für derartige Anwendungen ist die Verwendung für Formteile in Fahrzeugen, besonders bevorzugt in Kraftfahrzeugen (KFZ), insbesondere in KFZ-Strukturbauteilen. Außerdem bevorzugt sind Haushaltsanwendungen.

Besonders bevorzugt sind hierbei
- Luftführungen, insbesondere Ansaugmodule, Ladeluftsysteme, Ölkreislauf in Motoren, insbesondere Ölfiltergehäuse, Kühlkreislauf von Motoren, insbesondere Kühlwasserrohre, Ausgleichsbehälter, Pumpengehäuse und Flügelräder;
- Motoren, insbesondere Luftansaugrohres, Ölwannen, Motorlager, Getriebebrücken; Koppelstangen, Frontends, Elektronikhaltern, Batterieträgern, sowie diverse in Fahrzeugen positionierte Halterungen;
- Beschläge, insbesondere Möbelbeschläge, Türschlösser, Parkbremse, Sportartikel;
- Haushaltsgeräte, insbesondere Küchenmaschinen, Waschmaschinen, Trockner Staubsauger, Powertools, Bohrmaschinen, Bohrhammer.

Darüber hinaus kann es sich bei den Schwingbauteilen mit verbesserter Betriebsfestigkeit um Polyamid 6 basierte Composite Strukturen sowie überspritzte Polyamid 6 basierte Composite Strukturen, aber auch durch Schweißnähte verbundene Polyamid 6 basierte Komponenten handeln.

Die Figuren **Fig.1** bis **Fig.3** stellen folgendes dar:
**Fig.1****:** Typischer Verlauf einer Wöhlerkurve = W für einen Probenkörper aus glasfaserverstärktem Polyamid (N=Anzahl der Schwingspiele); Quelle Wikipedia.
**Fig.2****:** Wöhlerkurve mit Darstellung sowohl des Low Cycle Fatigue (LCF) Bereichs als auch des High Cycle Fatigue Bereichs (HCF); Quelle Wikipedia.
**Fig.3****:** Beispiel eines erfindungsgemäß zu untersuchenden Schwingkörpers in Form eines sogenannten "HiAnt-beams" mit spritzgegossenem, durch Kreuzrippen ausgesteiftem U-Trägerprofil (= Position 2), worin P für Prüfrichtung steht, für einen Versuchsaufbau "Dreipunktbiegeversuch" (Position 1: Grundplatte; Position 3: Druckfinne; Position 4: Widerlager; Radien Druckfinne und Widerlager B = 30 mm; Stützweite A = 225 mm)

### Beispiele

### Beschreibung Wöhlerversuch an Prüfstäben

Grundlage für die Ermittlung des Ermüdungsverhaltens faserverstärkter Kunststoffe ist der Dauerschwingversuch, wie er im Buch Kunststoffprüfung W. Grellmann und S. Seidler, Hanser Verlag 2005, S. 169 - 181 beschrieben ist. Dabei wird in einem dynamisch-zyklischen Versuch eine sogenannte Wöhlerkurve ermittelt. Diese umfasst die Auftragung der Lastniveaus gegen die logarithmisch aufgetragene Anzahl der Schwingspiele beim jeweiligen Lastniveau. Für technische Kunststoffe lässt sich die Wöhlerkurve grob in zwei Abschnitte unterteilen. Der erste Bereich bei höheren Lastniveaus fällt in halblogarithmischer Darstellung steil näherungsweise linear ab und beschreibt die Zeitschwingfestigkeit des Materials (vgl. "low cycle fatigue" LCF-Bereich, **Fig.1**). Der zweite, bei niedrigeren Lastniveaus, flachere Teil der Kurve beschreibt die sogenannte Dauerfestigkeit des Materials (vgl. "high cycle fatigue" HCF-Bereich, **Fig.1**).

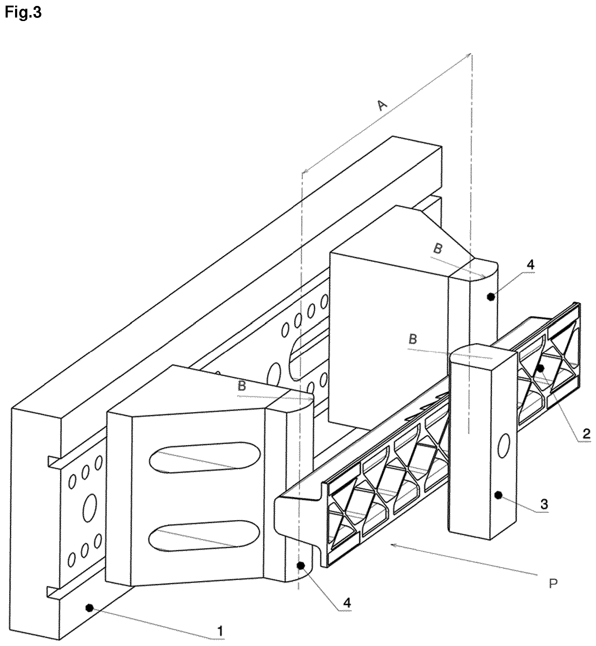

Dauerschwingversuche lassen sich sowohl an Standardprobekörpern wie Schulterstäben oder Flachstäben als auch an Formteilen beispielsweise durch Kreuzrippen ausgesteiften U-Trägerprofilen "HiAnt-beam" (vgl. Position 2 in **Fig.3**) durchführen.

Für die Simulation der normalerweise auch immer zu berücksichtigenden statischen Lastfälle werden ebenso die im Zugversuch nach DIN EN ISO 527 gemessenen Eigenschaften Bruchspannung und Bruchdehnung, sowie E-Modul bei definierten Temperaturen herangezogen.

Im Rahmen der vorliegenden Erfindung werden bzw. wurden Zugstäbe des Typs 1A gemäß EN ISO 527-2 in spritzfrischem Zustand mit einer Restfeuchte <0,12 Gew.-% (nach Karl-Fischer-Methode gemäß DIN EN ISO 15512 und bezogen auf 100 Gew.-% der fertigen Mischung) auf Basis erfindungsgemäß einzusetzender Zusammensetzungen unter den nachfolgend aufgelisteten Prüfbedingungen auf ihr dynamisch-zyklisches Verhalten in einem Zugschwellversuch untersucht:
- Servohydraulische Prüfmaschine HC10 mit Temperierkammer der Fa. Zwick
- Umgebungstemperatur (Temperierkammer): 120°C
- Spritzgegossene Zugstäbe Typ 1A nach DIN EN ISO 527
- Konditionierungszustand: spritzfrisch
- Kraftregelung
- Prüffrequenz: 10 Hz (Sinus)
- Zugschwellversuch mit konstant 1 MPa Unterspannung um eine Druckbelastung und somit ein Ausknicken der Probekörper zu verhindern. Im Vergleich zu den vergleichsweise hohen Oberspannungen ergibt sich somit in erster Näherung ein Spannungsverhältnis R = Unterspannung / Oberspannung ≈ 0,
- Dauer Probenvorwärmung auf Prüftemperatur: 24 h bis 36 h.

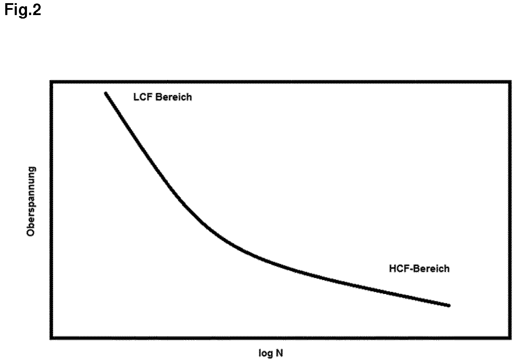

Folgende Überlegungen lagen der Wahl der Versuchsparameter zu Grunde:
- Da sich die mechanischen Eigenschaften des Polyamids bei Lagerung unter hoher Temperatur zunächst noch verändern, insbesondere durch Nachkristallisationsprozesse, Nachkondensationsprozesse, Rücktrocknungsprozesse, Relaxationsprozesse, werden die Proben vor der Prüfung 24 h bis 36 h vorgewärmt, um robuste und reproduzierbare Ergebnisse zu gewährleisten.
- Da die Festigkeit (quasistatisch wie dynamisch-zyklisch) mit steigender Temperatur abnimmt, liegt der festigkeitskritischste Lastfall bei der Bauteilauslegung normalerweise bei der höchsten Temperatur im Lastenheft.
- Bei Strukturbauteilen gibt es üblicherweise eine Temperaturanforderung im Bereich von 80°C bis 90°C, bei Motorraumbauteilen liegt diese häufig noch höher (100°C bis 150°C).
- Die gewählte Prüffrequenz von 10 Hz ermöglicht eine ausreichend schnelle Prüfung, erlaubt aber bei hohen Lastniveaus mit je nach Material großen Wegamplituden trotzdem noch eine saubere Regelung des angestrebten sinusförmigen Kraftsignals.
- Mit den gewählten 10 Hz lässt sich innerhalb eines Tages Prüfdauer eine Wöhlerkurve aufziehen, die sowohl den Low Cycle Fatigue (LCF) Bereich als auch den High Cycle Fatigue Bereich (HCF) (siehe **Fig.2**) ausreichend weit abdeckt, d.h. von «1.000 Zyklen bis »100.000 Zyklen reicht.

Zu LCF siehe: https://en.wikipedia.org/wiki/Low-cycle_fatigue

Zu HCF siehe: https://de.wikipedia.org/wiki/Schwingfestigkeit

**Fig.1****:** Typischer Verlauf einer Wöhlerkurve für einen Probekörper aus glasfaserverstärktem Polyamid (N=Anzahl der Schwingspiele)
- Die geprüfte Probenanzahl (üblicherweise ca. 10) ermöglicht außerdem eine genügend feine Staffelung der Lastniveaus, um auffällige Prüfwerte in der Wöhlerkurve auch ohne Mehrfachprüfung eines einzelnen Lastniveaus ausreichend sicher identifizieren zu können.
- Für den Vergleich der einzelnen Materialien in dieser Anmeldung wurden Lastniveaus gewählt, die im High Cycle Fatigue Bereich (HCF) der Wöhlerkurven für die jeweiligen Materialien lagen.

### Beschreibung Wöhlerversuch an Bauteilen

Um die Übertragbarkeit der in Dauerschwingversuchen an Normprobekörpern gewonnenen Ergebnisse auf Formteile zu gewährleisten, wurden auch Dauerschwingversuche an sogenannten "HiAnt-beams" (spritzgegossenes, durch Kreuzrippen ausgesteiftes U-Trägerprofil, Position 2 in **Fig.3**) durchgeführt.
- Die Formteile wurden in einem Dreipunktbiegeaufbau (siehe Fig.3) zyklisch mit einem elektromechanisch angetriebenen Einzelprüfzylinder EZ010 der Fa. Zwick mit einer Frequenz von 5 Hz mit einem sinusförmigen Kraftsignal beaufschlagt.
- Die Versuche wurden unter Normklima (23°C; 50 % rel. Luftfeuchte) an in Anlehnung an DIN EN ISO 1110 konditionierten Formteilen durchgeführt.
- Die Stützweite (vgl. **Fig.3** Abmessung "A") beträgt 225 mm. Die Radien der Widerlager als auch der Druckfinne (vgl. **Fig.3** Abmessung "B") betragen 30 mm.
- Das untere Kraftniveau ("Druckkraft") betrug konstant 100 N. Das obere Kraftniveau ("Druckkraft") wurde von Versuch zu Versuch variiert. Jeder Versuch wurde bis zum Versagen des Formteils durch Bruch durchgeführt.
- Die Anzahl von Zyklen bis Erreichen des Bruches in Kombination mit dem jeweils angelegten oberen Kraftniveau wird für den Vergleich des Verhaltens der aus unterschiedlichen Materialien hergestellten Formteile herangezogen.

**Fig.3****:** Versuchsaufbau Dreipunktbiegeversuch an HiAnt-beam (Position 1: Grundplatte; Position 2: HiAnt-beam; Position 3: Druckfinne; Position 4: Widerlager; Radien Druckfinne und Widerlager B = 30 mm; Stützweite A = 225 mm)

### Prüfung zur Identifizierung einer HR Glasfaser

Um eine HR Glasfaser von einer nicht-HR-Glasfaser zu unterscheiden, kann man folgenden Test verwenden. Die zu untersuchende Faser wird in einer Menge von 43 Massenanteilen bezogen auf 100 Masseteile Polyamid 66 (relative Lösungsviskosität in m-Kresol im Bereich von 2,8 - 3,2, 35 - 55 Milliequivalent Aminoendgruppen / 1 kg PA und 50 - 75 Milliequivalent Säureendgruppen / 1 kg PA, z.B. Ultramid® A27E ; Fa. BASF)) in einem Zweiwellenextruder des Typs ZSK 26 Compounder der Firma Coperion Werner & Pfleiderer (Stuttgart, Deutschland) bei einer Temperatur von ca. 290°C gemischt, als Strang in ein Wasserbad ausgetragen, bis zur Granulierfähigkeit abgekühlt und granuliert. Das Granulat wird ca. zwei Tage bei 70 °C im Vakuumtrockenschrank bis zu einer Restfeuchte von kleiner 0,12% getrocknet und auf einer Spritzguss Maschine Typ SG370-173732 der Fa. Arburg GmbH & Co. KG zu 10 Flachstäben DIN EN ISO 180 1-U der nominellen Größe 80 mm • 10 mm • 4 mm verspritzt. Die Massetemperatur beträgt 290 °C und die Formtemperatur 80 °C. Diese Flachstäbe werden in einem Autoklaven (Varioklav Thermo Type 400E) in mindestens 500 ml eines 1:1 Gemisches (gleiche Volumenanteile) aus Wasser und Ethylenglykol bei 130 °C / ca. 2 bar für 1000 h gelagert. Nach Abschluss der Lagerungsdauer und Abkühlung auf Raumtemperatur führt man eine Schlagprüfung gemäß Izod durch (ISO180-1U), wobei Compounds mit HR-Glasfasern mindestens eine Schlagzähigkeit von 12 kJ/m² erreichen.

### Erfindungsgemäße Beispiele

Zum Nachweis der technischen Vorteile erfindungsgemäß herzustellender Schwingbauteile wurden aus erfindungsgemäß einzusetzenden Zusammensetzungen zunächst im Extruder Formmassen hergestellt. Gemäß ISO 294-3 mittels Spritzguss aus den Formmassen erhaltene Normprobekörper in Form von Zugstäben gemäß EN ISO 527-2 wurden in spritzfrischem Zustand im Dauerschwingversuch bei verschiedenen Lastniveaus geprüft.

### Herstellung der Polyamid-Formmassen

Die einzelnen in Tab.1 genannten Komponenten wurden in einem Zweiwellenextruder des Typs ZSK 26 Compounder der Firma Coperion Werner & Pfleiderer (Stuttgart, Deutschland) bei Temperaturen von ca. 260°C gemischt, als Strang in ein Wasserbad ausgetragen, bis zur Granulierfähigkeit abgekühlt und granuliert. Das Granulat wurde ca. zwei Tage bei 70°C im Vakuumtrockenschrank bis zu einer Restfeuchte von kleiner 0,12% getrocknet.

Im Rahmen der vorliegenden Erfindung verwendete Materialien:

| | |
|---|---|
| Komponente A1): | Lineares Polyamid 6 (Durethan® B29 der Firma LANXESS Deutschland GmbH) mit einer relativen Lösungsviskosität von 2,9 (gemessen in m-Kresol bei 25 °C) |
| Komponente A2): | Lineares Polyamid 6 (Durethan® B24 der Firma LANXESS Deutschland GmbH) mit einer relativen Lösungsviskosität von 2,6 (gemessen in m-Kresol bei 25 °C) |
| Komponente B1): | Chopvantage® HP3610 (10 µm Durchmesser, mittlere Standardlänge 3,2mm aus E-Glas) der Firma PPG Industries Ohio (HR Faser aus E-Glas) |
| Komponente B2): | CS7997 (10 µm Durchmesser, mittlere Standardlänge 4,5mm aus E-Glas) der Firma LANXESS Deutschland GmbH (HR Faser aus E-Glas) |
| Komponente B3): | GF 12 µm Durchmesser, mittlere Standardlänge 4,5 mm mit Schlichte analog zur Glasfaser CS7928 der Firma LANXESS Deutschland GmbH (E-Glas jedoch keine HR Faser) |
| Komponente B4): | CS7928 (11 µm Durchmesser, mittlere Standardlänge 4,5mm) der Firma LANXESS Deutschland GmbH(E-Glas jedoch keine HR Faser) |
| Komponente B5): | GF 10,5 µm Durchmesser, mittlere Standardlänge 4,5 mm, mit Schlichte analog zur Glasfaser CS7928 der Firma LANXESS Deutschland GmbH (E-Glas jedoch keine HR Faser) |
| Komponente B6): | GF 10 µm Durchmesser, mittlere Standardlänge4,5 mm, mit Schlichte analog zur Glasfaser CS7928 der Firma LANXESS Deutschland GmbH (E-Glas jedoch keine HR Faser) |
| Komponente B7): | DS1128-10N (10 µm Durchmesser, mittlere Standardlänge 4,0mm) der Firma 3B Fibreglass(HR Faser aus E-Glas) |
| Komponente C1): | Kupfer(I)-iodid [CAS Nr. 7681-65-4], d₉₉ < 70 µm |
| Komponente C2): | Kaliumbromid [CAS Nr. 7758-02-3], d₉₉ < 70 µm |
| Komponente D1): | Montanesterwachs (Licowax® E, Clariant) [CAS-Nr. 73138-45-1] |
| Komponente D2): | Calciumstearat [CAS-Nr. 1592-23-0] |
| Komponente D3): | N,N'-Ethylen-bis-stearylamid (Acrawax® C, Lonza) [CAS-Nr. 110-30-5] |
| Komponente E): | Als weitere Additive wurden die folgenden, für die Verwendung in thermoplastischen Polyamiden gebräuchlichen Komponenten eingesetzt: |
| | Nukleierungsmittel: Talkum [CAS-Nr. 14807-96-6] in Mengen von 0,01 bis 1 Massenanteil |
| | Rußmasterbatch: 50%ig in Polyethylen oder 30%ig in Polyamid 6 |
| | Schwarzfarbstoff-Masterbatch Nigrosinbase NB (Solvent Black 7) 40% |
| Komponente F1): | Kane ACE IM240G der Firma Kaneka |
| Komponente F2): | Copolymerisat aus Ethen und Acrylsäure-2-ethylhexylester mit einem Ethen-Anteil von 63 Gewichts-% und einem MFI von 550 (Lotryl® 37 EH 550 der Firma Arkema) |
| Komponente G): | Dipentaerythritol [CAS Nr. 126-58-9] |

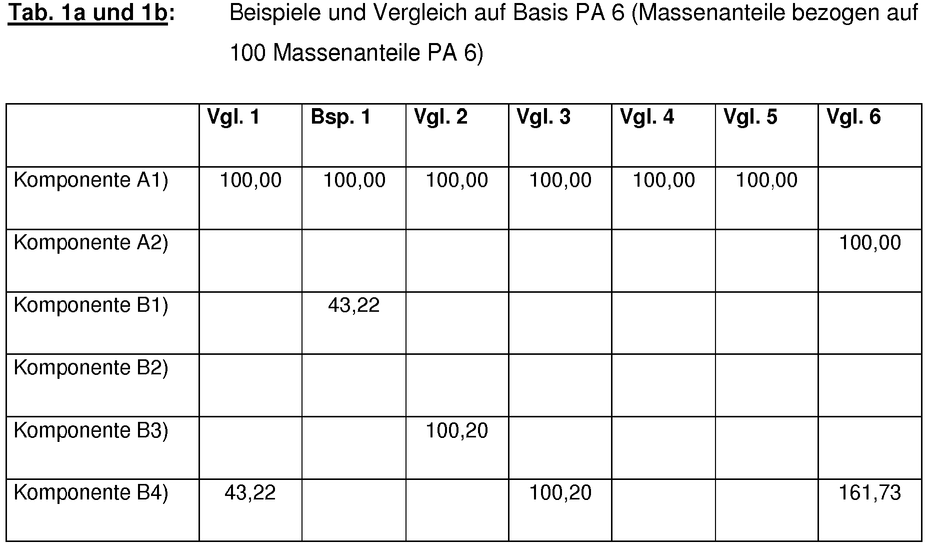

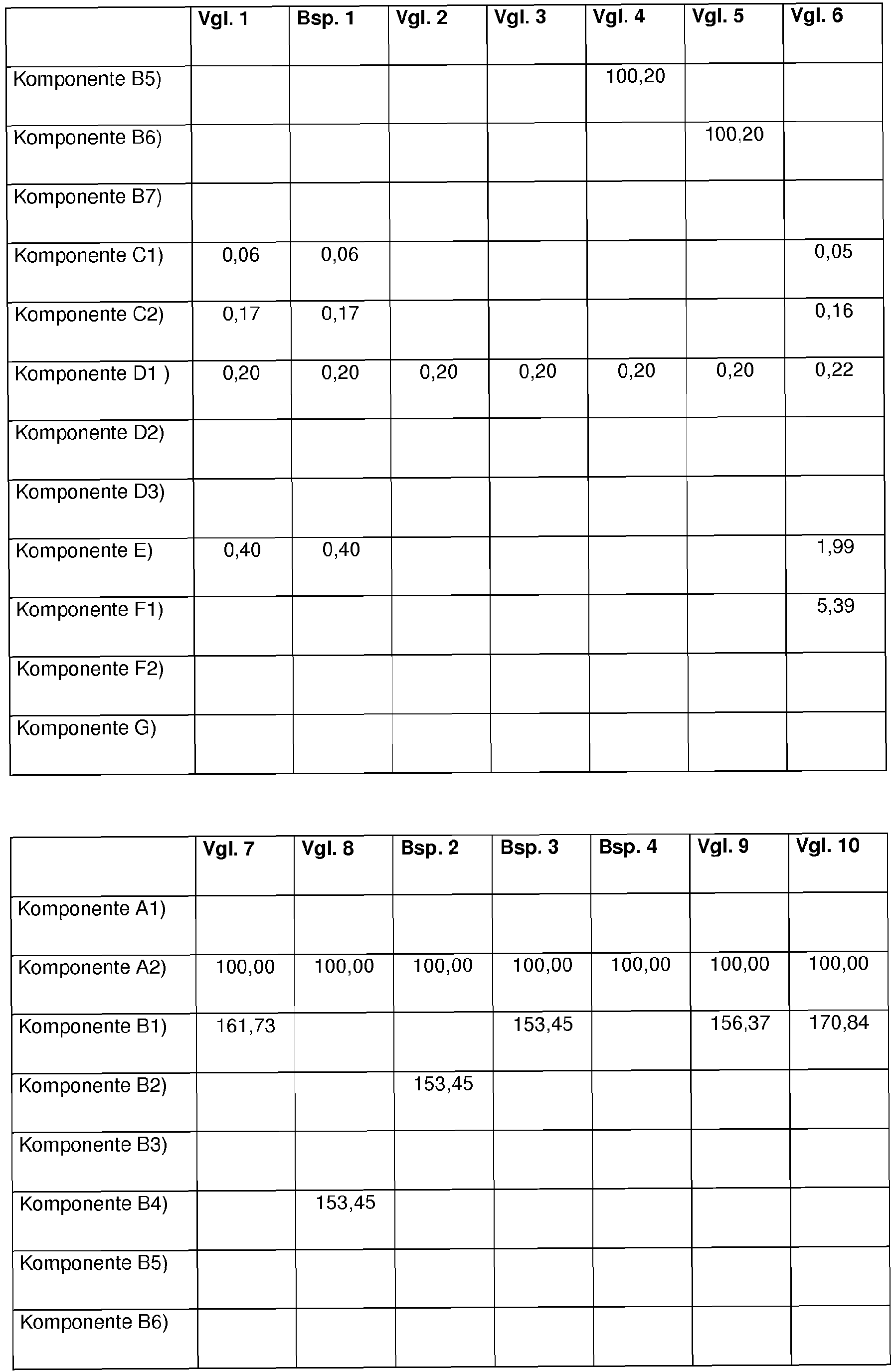

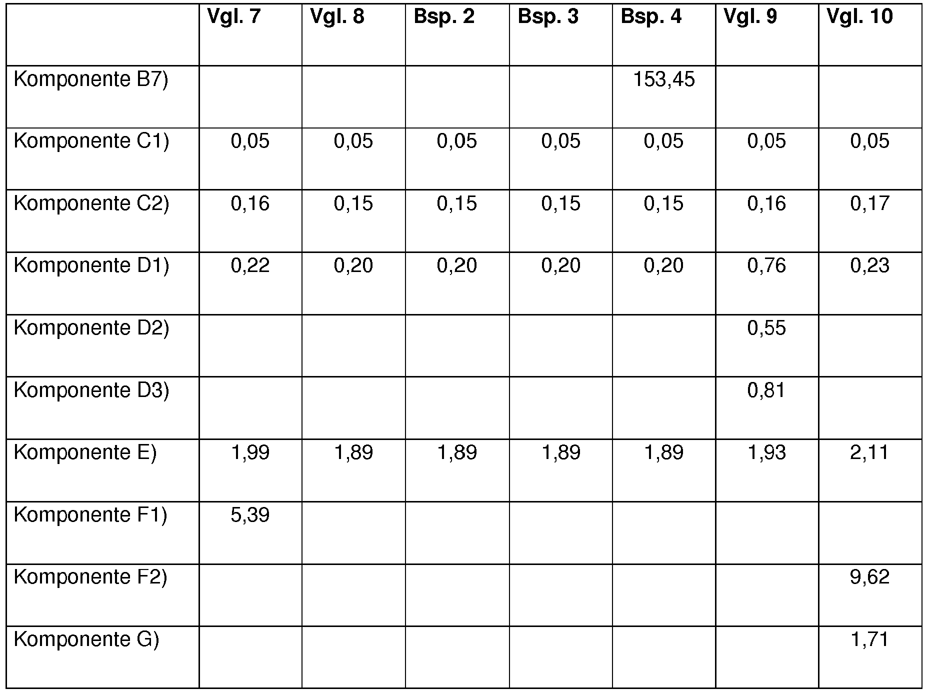

Der HR Glasfaseranteil betrug in den Formmassen Vgl. 1 und Bsp. 1 30%, in den Formassen Vgl. 2 bis Vgl. 5 50% und in den Formassen Vgl. 6 bis Vgl. 10 sowie Bsp. 2 bis Bsp. 4 60% des Gesamtgewichts. Da die Zusammensetzungen auf 100 Massenanteile PA 6 bezogen sind und sich dieser Anteil durch die unterschiedlichen Mengen an Beimengungen verändert, kommen die unterschiedlichen Zahlenwerte für die Massenanteile Glasfasern zustande.

### Spritzguss:

Der Spritzguss der erhaltenen Formmassen wurde auf einer Spritzguss Maschine Typ Allrounder 470A 1000-170 der Fa. Arburg GmbH & Co. KG durchgeführt. Die Massetemperatur betrug 280°C für die PA 6 basierten Formmassen. Die Werkzeugtemperatur betrug stets 80°C. Als Probekörper für die zyklisch-dynamischen Messungen wurden Schulterstäbe gemäß DIN EN ISO 527 Typ 1A gespritzt. Als Formteile wurden durch Kreuzrippen ausgesteifte U-Trägerprofile ("HiAnt-beams", Position 2 in **Fig.3**) hergestellt.

### Prüfung:

Die zyklisch-dynamischen Messungen an Zugprobekörpern in Form von Schulterstäben gemäß DIN EN ISO 527 Typ 1A wurden auf einer servohydraulischen Prüfmaschine HC10 der Firma Zwick bei 120°C durchgeführt. Dabei wurden in Anlehnung an ISO13003:2003 Wöhlerkurven aufgenommen.

Als Maß für die dynamisch-zyklische Belastung wurde die Anzahl der Schwingzyklen bis zum Versagensfall bei einer Oberspannung von 60 MPa für die PA 6 basierten Formmassen verwendet. Die Ergebnisse sind in Tab. 2 aufgeführt.

**Tab. 2a und 2b: Ergebnisse der zyklisch-dynamischen Messungen der Beispiele und Vergleich auf Basis PA 6**

| | **Vgl. 1** | **Bsp. 1** | **Vgl. 2** | **Vgl. 3** | **Vgl. 4** | **Vgl. 5** | **Vgl. 6** |
|---|---|---|---|---|---|---|---|
| Lastwechsel bis Bruch bei 60 MPa | 456 | 15491 | 4823 | 7551 | 14141 | 20989 | 64329 |

| | **Vgl. 7** | **Vgl. 8** | **Bsp. 2** | **Bsp. 3** | **Bsp. 4** | **Vgl. 9** | **Vgl. 10** |
|---|---|---|---|---|---|---|---|
| Lastwechsel bis Bruch bei 60 MPa | 193570 | 182904 | 328140 | 616845 | 558492 | 34598 | 61946 |

Die Ergebnisse zeigen, dass Probenkörper auf Basis einer mit HR Glasfaser verstärkten PA 6 Zusammensetzung (Massenanteil Glasfaser <100) über 30 mal mehr Schwingzyklen überstanden, als das jeweilige Vergleichsbeispiel mit einer nicht-HR Glasfaser mit demselben Füllgrad.

Beinhalteten wärmestabilisierte Probenkörper auf 100 Massenanteile PA6 nur 43,22 Massenanteile der Komponente B) (siehe Bsp.1 und Vgl.1), so erzielten diese mit HR Glasfasern aus E-Glas eine Steigerung der Lastwechsel bis zum Bruch von 456 auf 15491 !

Nicht wärmestabilisierte Probenkörper, d.h. ohne Komponente C), gemäß der Vgl.2 und Vgl.3 erfuhren zwar eine Steigerung der Lastwechsel auf 4823 bzw. 7551, jedoch erzielten diese längst nicht die Lastwechselzahlen der Bsp.2, Bsp.3 und Bsp.4. Vielmehr zeigten die Versuche, dass Probenkörper auf Basis einer mit HR Glasfaser hochverstärkten PA 6 Zusammensetzung (Massenanteil Glasfaser >100) wie im Falle der Bsp.2, Bsp.3 und Bsp.4, 2 bis 4 mal mehr Schwingzyklen überstanden, als das Vgl.8 mit einer nicht-HR Glasfaser.

Für Probekörper mit einer PA6 basierten Zusammensetzung ohne Schlagzäh- oder Elastomermodifikator (Vgl.8 sowie Bsp.3), konnte gezeigt werden, dass diese 3 mal mehr Schwingzyklen überstanden, als entsprechende Vergleichsbeispiele, welche einen Schlagzäh- oder Elastomermodifikator enthielten (Vgl.6 bzw. Vgl.7).

Probekörper basierend auf Zusammensetzungen mit Montanesterwachs als Entformungshilfsmittel (Bsp.3) überstanden 17 mal mehr Schwingzyklen als das mehr als 0,5 Massenanteile Stearat als Entformungshilfsmittel enthaltende Vgl.9.

Die dynamisch-zyklischen Messungen an HiAnt-beams wurden mit einem elektromechanisch angetriebenen Einzelprüfzylinder EZ010 der Fa. Zwick bei 23°C; 50 % rel. Luftfeuchte an in Anlehnung an DIN EN ISO 1110 konditionierten Formteilen durchgeführt. Als Maß für die dynamisch-zyklische Belastung wurde die Anzahl der Schwingzyklen bis zum Versagensfall verwendet. Die Ergebnisse sind in Tab.3 aufgeführt:

**Tab. 3: Beispiel und Vergleich auf Basis PA 6 (Massenanteile bezogen auf 100 Massenanteile PA 6)**

| | **Vgl. 1** | **Bsp. 1** |
|---|---|---|
| Komponente A1 | 100,00 | 100,00 |
| Komponente B1 | | 43,22 |
| Komponente B4 | 43,22 | |
| Komponente C1 | 0,06 | 0,06 |
| Komponente C2 | 0,17 | 0,17 |
| Komponente D1 | 0,20 | 0,20 |
| Komponente E | 0,40 | 0,40 |
| Lastwechsel bis Bruch bei 3 kN | 199231 | 498990 |
| Lastwechsel bis Bruch bei 2,75 kN | 711550 | 2090546 |

Es konnte gezeigt werden, dass eine Zusammensetzung gemäß Bsp.1 in einem Formteil in Form eines Hi-Ant Beams 2,5 bis 3 mal mehr Schwingzyklen übersteht, als ein Formteil in Form eines Hi-Ant Beams auf Basis einer Zusammensetzung gemäß Vgl.1.

## Patentansprüche

1. Verwendung von Zusammensetzungen enthaltend auf
A) 100 Massenanteile Polyamid 6,
B) 30 bis 160 Massenanteile HR Glasfasern aus E-Glas mit einem mittleren Durchmesser im Bereich von 10 +/-0,5 µm und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, und
C) 0,03 bis 0,2 Massenanteile wenigstens einer Metallverbindung der Metalle Cu, Fe, Ce oder Mn,
zur Steigerung der Betriebsfestigkeit von Schwingbauteilen mit der Maßgabe,
dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

2. Verwendung gemäß Anspruch 1, **dadurch gekennzeichnet, dass** die Zusammensetzungen auf
A) 100 Massenanteile Polyamid 6,
B) 30 bis 160 Massenanteile HR Glasfasern aus E-Glas mit einem mittleren Durchmesser im Bereich von 10 +/-0,5 µm und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt,
C) 0,03 bis 0,2 Massenanteile wenigstens einer Metallverbindung der Metalle Cu, Fe, Ce oder Mn, und
D) 0,05 bis 1,0 Massenanteile wenigstens eines Entformungsmittels
enthalten, mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

3. Verwendung gemäß Anspruch 1, **dadurch gekennzeichnet, dass** die Zusammensetzungen auf
A) 100 Massenanteile Polyamid 6,
B) 30 bis 160 Massenanteile HR Glasfasern aus E-Glas mit einem mittleren Durchmesser im Bereich von 10 +/-0,5 µm und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt,
C) 0,03 bis 0,2 Massenanteile wenigstens einer Metallverbindung der Metalle Cu, Fe, Ce oder Mn, und
E) 0,01 bis 5,0 Massenanteile wenigstens eines Additivs aus der Gruppe UV-Stabilisatoren, Pigmente, Farbmittel, von B) unterschiedliche Füllstoffe und Nukleierungsmittel enthalten,
mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

4. Verwendung gemäß Anspruch 2, **dadurch gekennzeichnet, dass** die Zusammensetzungen auf
A) 100 Massenanteile Polyamid 6,
B) 30 bis 160 Massenanteile HR Glasfasern aus E-Glas mit einem mittleren Durchmesser im Bereich von 10 +/-0,5 µm und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt,
C) 0,03 bis 0,2 Massenanteile wenigstens einer Metallverbindung der Metalle Cu, Fe, Ce oder Mn,
D) 0,05 bis 1,0 Massenanteile wenigstens eines Entformungsmittels, und
E) 0,01 bis 5,0 Massenanteile wenigstens eines Additivs aus der Gruppe UV-Stabilisatoren, Pigmente, Farbmittel, von B) unterschiedliche Füllstoffe und Nukleierungsmittel
enthalten, mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

5. Verwendung gemäß einem der Ansprüche 1 bis 4, **dadurch gekennzeichnet, dass** es sich bei der verseiften Fettsäure um Stearat, vorzugsweise Calciumstearat, handelt.

6. Verwendung gemäß einem der Ansprüche 1 bis 5, **dadurch gekennzeichnet, dass** als Kupferverbindungen der Komponente C) Kupferhalogenide, vorzugsweise in Kombination mit wenigstens einem Alkalimetallhalogenid oder Erdalkalimetallhalogenid,
als Eisenverbindungen Eisenoxid, Eisenformiat oder Eisenoxalat,
als Cerverbindung Certetrahydroxid und
als Manganverbindung Manganchlorid
eingesetzt werden..

7. Verwendung gemäß Anspruch 6, **dadurch gekennzeichnet, dass** als Alkalimetall- bzw. Erdalkalimetallhalogenide Kaliumbromid, Kaliumiodid, Natriumchlorid oder Calciumchlorid eingesetzt werden.

8. Verwendung gemäß Anspruch 6 oder 7, **dadurch gekennzeichnet, dass** wenigstens Kupfer(l)iodid in Verbindung mit Kaliumiodid oder Kaliumbromid eingesetzt wird.

9. Verwendung gemäß Anspruch 1, **dadurch gekennzeichnet, dass** Zusammensetzungen enthaltend auf 100 Massenanteile A) PA 6, als Komponente B) 30 bis 160 Massenanteile HR-Glasfasern aus E-Glas mit einem mittleren Durchmesser im Bereich von 9,5 bis 10,5 µm und einer mittleren Länge im Bereich von 3 bis 4,5 mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, und als Komponente C) 0,03 bis 0,2 Massenanteile Kupfer(I)iodid / Kaliumiodid, eingesetzt werden, mit der Maßgabe, dass nicht mehr als 10 Massenanteile Schlagzähmodifikator, und/oder nicht mehr als 10 Massenanteile Fließverbesserer, und/ oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

10. Verwendung gemäß Anspruch 2, **dadurch gekennzeichnet, dass** Zusammensetzungen enthaltend auf 100 Massenanteile A) PA 6, als Komponente B) 30 bis 160 Massenanteile HR-Glasfasern aus E-Glas mit einem mittleren Durchmesser im Bereich von 9,5 bis 10,5 µm und einer mittleren Länge im Bereich von 3 bis 4,5 mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, als Komponente C) 0,03 bis 0,2 Massenanteile Kupfer(l)iodid / Kaliumiodid, und als Komponente D) 0,05 bis 1,0 Massenanteile Montanesterwachs Licowax® E, eingesetzt werden, mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

11. Verwendung gemäß Anspruch 4, **dadurch gekennzeichnet, dass** Zusammensetzungen enthaltend auf 100 Massenanteile A) PA 6, als Komponente B) 30 bis 160 Massenanteile HR-Glasfasern aus E-Glas mit einem mittleren Durchmesser im Bereich von 9,5 bis 10,5 µm und einer mittleren Länge im Bereich von 3 bis 4,5 mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, als Komponente C) 0,03 bis 0,2 Massenanteile Kupfer(l)iodid / Kaliumiodid, als Komponente D) 0,05 bis 1,0 Massenanteile Montanesterwachs Licowax® E, und als Komponente E) 0,01 bis 5 Massenanteile Ruß oder Nigrosin, eingesetzt werden, mit der Maßgabe, dass nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure, vorzugsweise Stearat, insbesondere Calciumstearat, als Entformungsmittel enthalten sind, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

12. Verfahren zur Steigerung der Betriebsfestigkeit Polyamid 6 basierter Schwingbauteile, **dadurch gekennzeichnet, dass** zu deren Herstellung Zusammensetzungen enthaltend auf
A) 100 Massenanteile Polyamid 6,
B) 30 bis 160 Massenanteile HR Glasfasern aus E-Glas mit einem mittleren Durchmesser im Bereich von 10 +/-0,5 µm und einer mittleren Länge im Bereich von 3 bis 4,5mm, wobei die Längen- und Durchmesserbestimmung der Einzelfaser halbautomatisch anhand rasterelektronenmikroskopischer Bilder (REM) mittels Grafiktableau und rechnergestützter Datenerfassung erfolgt, und
C) 0,03 bis 0,2 Massenanteile wenigstens einer Metallverbindung der Metalle Cu, Fe, Ce oder Mn,
im Spritzguss, in der Extrusion oder beim Blasformen, insbesondere im Spritzguss, eingesetzt werden, mit der Maßgabe, dass die Zusammensetzungen nicht mehr als 10 Massenanteile Schlagzähmodifikator, und/oder nicht mehr als 10 Massenanteile Fließverbesserer, und/oder nicht mehr als 10 Massenanteile Flammschutzadditiv, und/oder nicht mehr als 0,5 Massenanteile verseifte Fettsäure als Entformungsmittel enthalten, und als Komponente B) einzusetzende HR Glasfasern mit Polyamid 66 zu Flachstäben gemäß DIN EN ISO 180 1-U der nominellen Größe 80 mm • 10 mm • 4 mm verspritzt und nach 1000h Lagerung in einem Autoklaven bei 130°C/ca. 2 bar, in einem 1:1 Gemisch aus Wasser und Ethylenglykol, eine bei 23 +/- 2°C nach ISO180-1U zu ermittelnde Schlagzähigkeit gemäß Izod von mindestens 12 kJ/m² aufweisen.

13. Verfahren gemäß Anspruch 12, **dadurch gekennzeichnet, dass** die Zusammensetzungen unmittelbar vor der Verarbeitung eine nach der Karl-Fischer-Methode gemäß DIN EN ISO 15512 zu bestimmende Restfeuchte < 0,12 Gew.-%, bezogen auf 100 Gew.-% der fertigen Mischung, aufweisen.

14. Verfahren gemäß Anspruch 13, **dadurch gekennzeichnet, dass** vor dem Spritzguss, vor der Extrusion oder vor dem Blasformen die Restfechte < 0,12 Gew.-% beträgt.

15. Verfahren gemäß einem der Ansprüche 12 bis 14, **dadurch gekennzeichnet, dass** es sich um Schwingbauteile in Kraftfahrzeugen, vorzugsweise im Motorraum von Kraftfahrzeugen mit Verbrennungsmotor, handelt.

## Claims

1. Use of compositions comprising, for every
A) 100 parts by mass of nylon-6,
B) 30 to 160 parts by mass of HR glass fibres made of E glass and having an average diameter in the range of 10 +/- 0.5 µm and an average length in the range from 3 to 4.5 mm, where the length and diameter of the individual fibres are determined semi-automatically using scanning electron micrographs (SEM) by means of a graphics tablet and computer-assisted data collection,
and
C) 0.03 to 0.2 part by mass of at least one metal compound of the metals Cu, Fe, Ce or Mn,
for increasing the operational stability of vibration components, with the proviso
that not more than 10 parts by mass of impact modifier, and/or not more than 10 parts by mass of flow improver, and/or not more than 10 parts by mass of flame retardancy additive, and/or not more than 0.5 part by mass of hydrolysed fatty acid as demoulding agent are present, and HR glass fibres to be used as component B) are injection-moulded with nylon-6,6 to give flat specimens according to DIN EN ISO 180 1-U of nominal size 80 mm • 10 mm • 4 mm and, after storage in an autoclave at 130°C/about 2 bar for 1000 h, in a 1:1 mixture of water and ethylene glycol, have an Izod impact resistance to be determined according to ISO180-1U at 23 +/- 2°C of at least 12 kJ/m².

2. Use according to Claim 1, **characterized in that** the compositions comprise, for every
A) 100 parts by mass of nylon-6,
B) 30 to 160 parts by mass of HR glass fibres made of E glass and having an average diameter in the range of 10 +/- 0.5 µm and an average length in the range from 3 to 4.5 mm, where the length and diameter of the individual fibres are determined semi-automatically using scanning electron micrographs (SEM) by means of a graphics tablet and computer-assisted data collection,
C) 0.03 to 0.2 part by mass of at least one metal compound of the metals Cu, Fe, Ce or Mn, and
D) 0.05 to 1.0 part by mass of at least one demoulding agent,
with the proviso that not more than 10 parts by mass of impact modifier, and/or not more than 10 parts by mass of flow improver, and/or not more than 10 parts by mass of flame retardancy additive, and/or not more than 0.5 part by mass of hydrolysed fatty acid as demoulding agent are present, and HR glass fibres to be used as component B) are injection-moulded with nylon-6,6 to give flat specimens according to DIN EN ISO 180 1-U of nominal size 80 mm • 10 mm • 4 mm and, after storage in an autoclave at 130°C/about 2 bar for 1000 h, in a 1:1 mixture of water and ethylene glycol, have an Izod impact resistance to be determined according to ISO180-1U at 23 +/- 2°C of at least 12 kJ/m².

3. Use according to Claim 1, **characterized in that** the compositions comprise, for every
A) 100 parts by mass of nylon-6,
B) 30 to 160 parts by mass of HR glass fibres made of E glass and having an average diameter in the range of 10 +/- 0.5 µm and an average length in the range from 3 to 4.5 mm, where the length and diameter of the individual fibres are determined semi-automatically using scanning electron micrographs (SEM) by means of a graphics tablet and computer-assisted data collection,
C) 0.03 to 0.2 part by mass of at least one metal compound of the metals Cu, Fe, Ce or Mn, and
E) 0.01 to 5.0 parts by mass of at least one additive from the group of UV stabilizers, pigments, colourants, fillers other than B) and nucleating agents,
with the proviso that not more than 10 parts by mass of impact modifier, and/or not more than 10 parts by mass of flow improver, and/or not more than 10 parts by mass of flame retardancy additive, and/or not more than 0.5 part by mass of hydrolysed fatty acid as demoulding agent are present, and HR glass fibres to be used as component B) are injection-moulded with nylon-6,6 to give flat specimens according to DIN EN ISO 180 1-U of nominal size 80 mm • 10 mm • 4 mm and, after storage in an autoclave at 130°C/about 2 bar for 1000 h, in a 1:1 mixture of water and ethylene glycol, have an Izod impact resistance to be determined according to ISO180-1U at 23 +/- 2°C of at least 12 kJ/m².

4. Use according to Claim 2, **characterized in that** the compositions comprise, for every
A) 100 parts by mass of nylon-6,
B) 30 to 160 parts by mass of HR glass fibres made of E glass and having an average diameter in the range of 10 +/- 0.5 µm and an average length in the range from 3 to 4.5 mm, where the length and diameter of the individual fibres are determined semi-automatically using scanning electron micrographs (SEM) by means of a graphics tablet and computer-assisted data collection,
C) 0.03 to 0.2 part by mass of at least one metal compound of the metals Cu, Fe, Ce or Mn,
D) 0.05 to 1.0 part by mass of at least one demoulding agent, and
E) 0.01 to 5.0 parts by mass of at least one additive from the group of UV stabilizers, pigments, colourants, fillers other than B) and nucleating agents,
with the proviso that not more than 10 parts by mass of impact modifier, and/or not more than 10 parts by mass of flow improver, and/or not more than 10 parts by mass of flame retardancy additive, and/or not more than 0.5 part by mass of hydrolysed fatty acid, preferably stearate, especially calcium stearate, as demoulding agent are present, and HR glass fibres to be used as component B) are injection-moulded with nylon-6,6 to give flat specimens according to DIN EN ISO 180 1-U of nominal size 80 mm • 10 mm • 4 mm and, after storage in an autoclave at 130°C/about 2 bar for 1000 h, in a 1:1 mixture of water and ethylene glycol, have an Izod impact resistance to be determined according to ISO180-1U at 23 +/- 2°C of at least 12 kJ/m².

5. Use according to any of Claims 1 to 4, **characterized in that** the hydrolysed fatty acid is stearate, preferably calcium stearate.

6. Use according to any of Claims 1 to 5, **characterized in that** the copper compounds used in component C) are copper halides, preferably in combination with at least one alkali metal halide or alkaline earth metal halide, the iron compounds used are iron oxide, iron formate or iron oxalate,
the cerium compound used is cerium tetrahydroxide and the manganese compound used is manganese chloride.

7. Use according to Claim 6, **characterized in that** the alkali metal halides or alkaline earth metal halides used are potassium bromide, potassium iodide, sodium chloride or calcium chloride.

8. Use according to Claim 6 or 7, **characterized in that** at least copper (I) iodide is used in conjunction with potassium iodide or potassium bromide.

9. Use according to Claim 1, **characterized in that** compositions comprising, for every 100 parts by mass of A) PA 6, as component B) 30 to 160 parts by mass of HR glass fibres made of E glass and having an average diameter in the range from 9.5 to 10.5 µm and an average length in the range from 3 to 4.5 mm, where the length and diameter of the individual fibres are determined semi-automatically using scanning electron micrographs (SEM) by means of a graphics tablet and computer-assisted data collection, and as component C) 0.03 to 0.2 part by mass of copper(I) iodide/potassium iodide are used, with the proviso that not more than 10 parts by mass of impact modifier, and/or not more than 10 parts by mass of flow improver, and/or not more than 10 parts by mass of flame retardancy additive, and/or not more than 0.5 part by mass of hydrolysed fatty acid, preferably stearate, especially calcium stearate, as demoulding agent are present, and HR glass fibres to be used as component B) are injection-moulded with nylon-6,6 to give flat specimens according to DIN EN ISO 180 1-U of nominal size 80 mm • 10 mm • 4 mm and, after storage in an autoclave at 130°C/about 2 bar for 1000 h, in a 1:1 mixture of water and ethylene glycol, have an Izod impact resistance to be determined according to ISO180-1U at 23 +/- 2°C of at least 12 kJ/m².

10. Use according to Claim 2, **characterized in that** compositions comprising, for every 100 parts by mass of A) PA 6, as component B) 30 to 160 parts by mass of HR glass fibres made of E glass and having an average diameter in the range from 9.5 to 10.5 µm and an average length in the range from 3 to 4.5 mm, where the length and diameter of the individual fibres are determined semi-automatically using scanning electron micrographs (SEM) by means of a graphics tablet and computer-assisted data collection, as component C) 0.03 to 0.2 part by mass of copper (I) iodide/potassium iodide, and as component D) 0.05 to 1.0 part by mass of Licowax® E montan ester wax are used, with the proviso that not more than 10 parts by mass of impact modifier, and/or not more than 10 parts by mass of flow improver, and/or not more than 10 parts by mass of flame retardancy additive, and/or not more than 0.5 part by mass of hydrolysed fatty acid, preferably stearate, especially calcium stearate, as demoulding agent are present, and HR glass fibres to be used as component B) are injection-moulded with nylon-6,6 to give flat specimens according to DIN EN ISO 180 1-U of nominal size 80 mm • 10 mm • 4 mm and, after storage in an autoclave at 130°C/about 2 bar for 1000 h, in a 1:1 mixture of water and ethylene glycol, have an Izod impact resistance to be determined according to ISO180-1U at 23 +/- 2°C of at least 12 kJ/m².

11. Use according to Claim 4, **characterized in that** compositions comprising, for every 100 parts by mass of A) PA 6, as component B) 30 to 160 parts by mass of HR glass fibres made of E glass and having an average diameter in the range from 9.5 to 10.5 µm and an average length in the range from 3 to 4.5 mm, where the length and diameter of the individual fibres are determined semi-automatically using scanning electron micrographs (SEM) by means of a graphics tablet and computer-assisted data collection, as component C) 0.03 to 0.2 part by mass of copper (I) iodide/potassium iodide, as component D) 0.05 to 1.0 part by mass of Licowax® E montan ester wax, and as component E) 0.01 to 5 parts by mass of carbon black or nigrosin are used, with the proviso that not more than 10 parts by mass of impact modifier, and/or not more than 10 parts by mass of flow improver, and/or not more than 10 parts by mass of flame retardancy additive, and/or not more than 0.5 part by mass of hydrolysed fatty acid, preferably stearate, especially calcium stearate, as demoulding agent are present, and HR glass fibres to be used as component B) are injection-moulded with nylon-6,6 to give flat specimens according to DIN EN ISO 180 1-U of nominal size 80 mm • 10 mm • 4 mm and, after storage in an autoclave at 130°C/about 2 bar for 1000 h, in a 1:1 mixture of water and ethylene glycol, have an Izod impact resistance to be determined according to ISO180-1U at 23 +/- 2°C of at least 12 kJ/m².

12. Method for increasing the operational stability of nylon-6 based vibration components, **characterized in that** they are produced using compositions comprising, for every
A) 100 parts by mass of nylon-6,
B) 30 to 160 parts by mass of HR glass fibres made of E glass and having an average diameter in the range of 10 +/- 0.5 µm and an average length in the range from 3 to 4.5 mm, where the length and diameter of the individual fibres are determined semi-automatically using scanning electron micrographs (SEM) by means of a graphics tablet and computer-assisted data collection, and
C) 0.03 to 0.2 part by mass of at least one metal compound of the metals Cu, Fe, Ce or Mn,
by injection moulding, by extrusion or by blow-moulding, especially by injection moulding, with the proviso that the compositions contain not more than 10 parts by mass of impact modifier, and/or not more than 10 parts by mass of flow improver, and/or not more than 10 parts by mass of flame retardancy additive, and/or not more than 0.5 part by mass of hydrolysed fatty acid as demoulding agent, and HR glass fibres to be used as component B) are injection-moulded with nylon-6,6 to give flat specimens according to DIN EN ISO 180 1-U of nominal size 80 mm • 10 mm • 4 mm and, after storage in an autoclave at 130°C/about 2 bar for 1000 h, in a 1:1 mixture of water and ethylene glycol, have an Izod impact resistance to be determined according to ISO180-1U at 23 +/- 2°C of at least 12 kJ/m².

13. Method according to Claim 12, **characterized in that** the compositions immediately prior to processing have a residual moisture content to be determined by the Karl Fischer method according to DIN EN ISO 15512 of < 0.12% by weight, based on 100% by weight of the finished mixture.

14. Method according to Claim 13, **characterized in that** the residual moisture content prior to injection moulding, prior to extrusion or prior to blow-moulding is < 0.12% by weight.

15. Method according to any of Claims 12 to 14, **characterized in that** the vibration components are in motor vehicles, preferably within the engine space of motor vehicles having an internal combustion engine.

## Revendications

1. Utilisation de compositions contenant
A) pour 100 parties en masse de polyamide 6,
B) 30 à 160 parties en masse de fibres de verre HR composées de verre E dotées d'un diamètre moyen dans la plage de 10 ± 0,5 µm et d'une longueur moyenne dans la plage de 3 à 4,5 mm, la détermination de la longueur et du diamètre des fibres individuelles étant réalisée de manière semi-automatique à l'aide d'images de microscopie électronique à balayage (MEB) au moyen d'une tablette graphique et d'une acquisition de données assistée par ordinateur, et
C) 0,03 à 0,2 partie en masse d'au moins un composé métallique des métaux Cu, Fe, Ce ou Mn,
pour l'élévation de la résistance en service de composants oscillants à la condition que pas plus de 10 parties en masse de modificateur de résistance aux chocs, et/ou pas plus de 10 parties en masse d'agent améliorant l'écoulement, et/ou pas plus de 10 parties en masse d'additif ignifugeant, et/ou pas plus de 0,5 partie en masse d'acide gras saponifié en tant qu'agent de démoulage ne soient contenus, et les fibres de verre HR devant être utilisées en tant que composant B) étant moulées par injection avec un polyamide 66 pour donner des barreaux plats selon la norme DIN EN ISO 180 1-U de taille nominale 80 mm • 10 mm • 4 mm et, après 1 000 h de stockage dans un autoclave à 130 °C/ca. 2 bars, dans un mélange 1 : 1 d'eau et d'éthylèneglycol, présentent une résistance aux chocs, à déterminer à 23 ± 2 °C d'après la norme ISO 180-1U, selon Izod, d'au moins 12 kJ/m².

2. Utilisation selon la revendication 1, **caractérisée en ce que** les compositions contiennent
A) pour 100 parties en masse de polyamide 6,
B) 30 à 160 parties en masse de fibres de verre HR composées de verre E dotées d'un diamètre moyen dans la plage de 10 ± 0,5 µm et d'une longueur moyenne dans la plage de 3 à 4,5 mm, la détermination de la longueur et du diamètre des fibres individuelles étant réalisée de manière semi-automatique à l'aide d'images de microscopie électronique à balayage (MEB) au moyen d'une tablette graphique et d'une acquisition de données assistée par ordinateur,
C) 0,03 à 0,2 partie en masse d'au moins un composé métallique des métaux Cu, Fe, Ce ou Mn, et
D) 0,05 à 1,0 partie en masse d'au moins un agent de démoulage,
à la condition que pas plus de 10 parties en masse de modificateur de résistance aux chocs, et/ou pas plus de 10 parties en masse d'agent améliorant l'écoulement, et/ou pas plus de 10 parties en masse d'additif ignifugeant, et/ou pas plus de 0,5 partie en masse d'acide gras saponifié en tant qu'agent de démoulage ne soient contenus, et les fibres de verre HR devant être utilisées en tant que composant B) étant moulées par injection avec un polyamide 66 pour donner des barreaux plats selon la norme DIN EN ISO 180 1-U de taille nominale 80 mm • 10 mm • 4 mm et, après 1 000 h de stockage dans un autoclave à 130 °C/ca. 2 bars, dans un mélange 1 : 1 d'eau et d'éthylèneglycol, présentent une résistance aux chocs, à déterminer à 23 ± 2 °C d'après la norme ISO 180-1U, selon Izod, d'au moins 12 kJ/m².

3. Utilisation selon la revendication 1, **caractérisée en ce que** les compositions contiennent
A) pour 100 parties en masse de polyamide 6,
B) 30 à 160 parties en masse de fibres de verre HR composées de verre E dotées d'un diamètre moyen dans la plage de 10 ± 0,5 µm et d'une longueur moyenne dans la plage de 3 à 4,5 mm, la détermination de la longueur et du diamètre des fibres individuelles étant réalisée de manière semi-automatique à l'aide d'images de microscopie électronique à balayage (MEB) au moyen d'une tablette graphique et d'une acquisition de données assistée par ordinateur,
C) 0,03 à 0,2 partie en masse d'au moins un composé métallique des métaux Cu, Fe, Ce ou Mn, et
E) 0,01 à 5,0 parties en masse d'au moins un additif du groupe des stabilisants UV, des pigments, des colorants, des charges différentes de B) et des agents de nucléation,
à la condition que pas plus de 10 parties en masse de modificateur de résistance aux chocs, et/ou pas plus de 10 parties en masse d'agent améliorant l'écoulement, et/ou pas plus de 10 parties en masse d'additif ignifugeant, et/ou pas plus de 0,5 partie en masse d'acide gras saponifié en tant qu'agent de démoulage ne soient contenus, et les fibres de verre HR devant être utilisées en tant que composant B) étant moulées par injection avec un polyamide 66 pour donner des barreaux plats selon la norme DIN EN ISO 180 1-U de taille nominale 80 mm • 10 mm • 4 mm et, après 1 000 h de stockage dans un autoclave à 130 °C/ca. 2 bars, dans un mélange 1 : 1 d'eau et d'éthylèneglycol, présentent une résistance aux chocs, à déterminer à 23 ± 2 °C d'après la norme ISO 180-1U, selon Izod, d'au moins 12 kJ/m².

4. Utilisation selon la revendication 2, **caractérisée en ce que** les compositions contiennent
A) pour 100 parties en masse de polyamide 6,
B) 30 à 160 parties en masse de fibres de verre HR composées de verre E dotées d'un diamètre moyen dans la plage de 10 ± 0,5 µm et d'une longueur moyenne dans la plage de 3 à 4,5 mm, la détermination de la longueur et du diamètre des fibres individuelles étant réalisée de manière semi-automatique à l'aide d'images de microscopie électronique à balayage (MEB) au moyen d'une tablette graphique et d'une acquisition de données assistée par ordinateur,
C) 0,03 à 0,2 partie en masse d'au moins un composé métallique des métaux Cu, Fe, Ce ou Mn,
D) 0,05 à 1,0 partie en masse d'au moins un agent de démoulage, et
E) 0,01 à 5,0 parties en masse d'au moins un additif du groupe des stabilisants UV, des pigments, des colorants, des charges différentes de B) et des agents de nucléation,
à la condition que pas plus de 10 parties en masse de modificateur de résistance aux chocs, et/ou pas plus de 10 parties en masse d'agent améliorant l'écoulement, et/ou pas plus de 10 parties en masse d'additif ignifugeant, et/ou pas plus de 0,5 partie en masse d'acide gras saponifié, de préférence un stéarate, en particulier du stéarate de calcium, en tant qu'agent de démoulage ne soient contenus, et les fibres de verre HR devant être utilisées en tant que composant B) étant moulées par injection avec un polyamide 66 pour donner des barreaux plats selon la norme DIN EN ISO 180 1-U de taille nominale 80 mm • 10 mm • 4 mm et, après 1 000 h de stockage dans un autoclave à 130 °C/ca. 2 bars, dans un mélange 1 : 1 d'eau et d'éthylèneglycol, présentent une résistance aux chocs, à déterminer à 23 ± 2 °C d'après la norme ISO 180-1U, selon Izod, d'au moins 12 kJ/m².

5. Utilisation selon l'une quelconque des revendications 1 à 4, **caractérisée en ce que** l'acide gras saponifié est un stéarate, de préférence le stéarate de calcium.

6. Utilisation selon l'une quelconque des revendications 1 à 5, **caractérisée en ce qu'**en tant que composés du cuivre du composant C), des halogénures de cuivre, de préférence en combinaison avec au moins un halogénure de métal alcalin ou un halogénure de métal alcalino-terreux,
en tant que composés du fer, un oxyde de fer, du formiate de fer ou de l'oxalate de fer,
en tant que composé du cérium, le tétroxyde de cérium et
en tant que composé de manganèse, du chlorure de manganèse
sont utilisés.

7. Utilisation selon la revendication 6, **caractérisée en ce qu'**en tant qu'halogénures de métal alcalin ou de métal alcalino-terreux, du bromure de potassium, de l'iodure de potassium, du chlorure de sodium ou du chlorure de calcium sont utilisés.

8. Utilisation selon la revendication 6 ou 7, **caractérisée en ce qu'**au moins de l'iodure de cuivre(I) est utilisé conjointement avec de l'iodure de potassium ou du bromure de potassium.

9. Utilisation selon la revendication 1, **caractérisée en ce que** des compositions contenant pour 100 parties en masse A) de PA 6, en tant que composant B) 30 à 160 parties en masse de fibres de verre HR composées de verre E dotées d'un diamètre moyen dans la plage de 9,5 à 10,5 µm et d'une longueur moyenne dans la plage de 3 à 4,5 mm, la détermination de la longueur et du diamètre des fibres individuelles étant réalisée de manière semi-automatique à l'aide d'images de microscopie électronique à balayage (MEB) au moyen d'une tablette graphique et d'une acquisition de données assistée par ordinateur, et en tant que composant C) 0,03 à 0,2 partie en masse d'iodure de cuivre(I)/iodure de potassium, sont utilisées, à la condition que pas plus de 10 parties en masse de modificateur de résistance aux chocs, et/ou pas plus de 10 parties en masse d'agent améliorant l'écoulement, et/ou pas plus de 10 parties en masse d'additif ignifugeant, et/ou pas plus de 0,5 partie en masse d'acide gras saponifié, de préférence un stéarate, en particulier du stéarate de calcium, en tant qu'agent de démoulage ne soient contenus, et les fibres de verre HR devant être utilisées en tant que composant B) étant moulées par injection avec un polyamide 66 pour donner des barreaux plats selon la norme DIN EN ISO 180 1-U de taille nominale 80 mm • 10 mm • 4 mm et, après 1 000 h de stockage dans un autoclave à 130 °C/ca. 2 bars, dans un mélange 1 : 1 d'eau et d'éthylèneglycol, présentent une résistance aux chocs, à déterminer à 23 ± 2 °C d'après la norme ISO 180-1U, selon Izod, d'au moins 12 kJ/m².

10. Utilisation selon la revendication 2, **caractérisée en ce que** des compositions contenant pour 100 parties en masse A) de PA 6, en tant que composant B) 30 à 160 parties en masse de fibres de verre HR composées de verre E dotées d'un diamètre moyen dans la plage de 9,5 à 10,5 µm et d'une longueur moyenne dans la plage de 3 à 4,5 mm, la détermination de la longueur et du diamètre des fibres individuelles étant réalisée de manière semi-automatique à l'aide d'images de microscopie électronique à balayage (MEB) au moyen d'une tablette graphique et d'une acquisition de données assistée par ordinateur, en tant que composant C) 0,03 à 0,2 partie en masse d'iodure de cuivre(I)/iodure de potassium, et en tant que composant D) 0,05 à 1,0 partie en masse d'une cire d'esters montaniques Licowax® E, sont utilisées, à la condition que pas plus de 10 parties en masse de modificateur de résistance aux chocs, et/ou pas plus de 10 parties en masse d'agent améliorant l'écoulement, et/ou pas plus de 10 parties en masse d'additif ignifugeant, et/ou pas plus de 0,5 partie en masse d'acide gras saponifié, de préférence un stéarate, en particulier du stéarate de calcium, en tant qu'agent de démoulage ne soient contenus, et les fibres de verre HR devant être utilisées en tant que composant B) étant moulées par injection avec un polyamide 66 pour donner des barreaux plats selon la norme DIN EN ISO 180 1-U de taille nominale 80 mm • 10 mm • 4 mm et, après 1 000 h de stockage dans un autoclave à 130 °C/ca. 2 bars, dans un mélange 1 : 1 d'eau et d'éthylèneglycol, présentent une résistance aux chocs, à déterminer à 23 ± 2 °C d'après la norme ISO 180-1U, selon Izod, d'au moins 12 kJ/m².

11. Utilisation selon la revendication 4, **caractérisée en ce que** des compositions contenant pour 100 parties en masse A) de PA 6, en tant que composant B) 30 à 160 parties en masse de fibres de verre HR composées de verre E dotées d'un diamètre moyen dans la plage de 9,5 à 10,5 µm et d'une longueur moyenne dans la plage de 3 à 4,5 mm, la détermination de la longueur et du diamètre des fibres individuelles étant réalisée de manière semi-automatique à l'aide d'images de microscopie électronique à balayage (MEB) au moyen d'une tablette graphique et d'une acquisition de données assistée par ordinateur, en tant que composant C) 0,03 à 0,2 partie en masse d'iodure de cuivre(I)/iodure de potassium, en tant que composant D) 0,05 à 1,0 partie en masse d'une cire d'esters montaniques Licowax® E, et en tant que composant E) 0,01 à 5 parties en masse de suie ou de nigrosine, sont utilisées, à la condition que pas plus de 10 parties en masse de modificateur de résistance aux chocs, et/ou pas plus de 10 parties en masse d'agent améliorant l'écoulement, et/ou pas plus de 10 parties en masse d'additif ignifugeant, et/ou pas plus de 0,5 partie en masse d'acide gras saponifié, de préférence un stéarate, en particulier du stéarate de calcium, en tant qu'agent de démoulage ne soient contenus, et les fibres de verre HR devant être utilisées en tant que composant B) étant moulées par injection avec un polyamide 66 pour donner des barreaux plats selon la norme DIN EN ISO 180 1-U de taille nominale 80 mm • 10 mm • 4 mm et, après 1 000 h de stockage dans un autoclave à 130 °C/ca. 2 bars, dans un mélange 1 : 1 d'eau et d'éthylèneglycol, présentent une résistance aux chocs, à déterminer à 23 ± 2 °C d'après la norme ISO 180-1U, selon Izod, d'au moins 12 kJ/m².

12. Procédé pour l'élévation de la résistance en service de composants oscillants à base de polyamide 6, **caractérisé en ce que** pour leur préparation, des compositions contenant
A) pour 100 parties en masse de polyamide 6,
B) 30 à 160 parties en masse de fibres de verre HR composées de verre E dotées d'un diamètre moyen dans la plage de 10 ± 0,5 µm et d'une longueur moyenne dans la plage de 3 à 4,5 mm, la détermination de la longueur et du diamètre des fibres individuelles étant réalisée de manière semi-automatique à l'aide d'images de microscopie électronique à balayage (MEB) au moyen d'une tablette graphique et d'une acquisition de données assistée par ordinateur, et
C) 0,03 à 0,2 partie en masse d'au moins un composé métallique des métaux Cu, Fe, Ce ou Mn,
sont utilisées dans le moulage par injection, dans l'extrusion ou dans le moulage par soufflage, en particulier dans le moulage par injection, à la condition que les compositions ne contiennent pas plus de 10 parties en masse de modificateur de résistance aux chocs, et/ou pas plus de 10 parties en masse d'agent améliorant l'écoulement, et/ou pas plus de 10 parties en masse d'additif ignifugeant, et/ou pas plus de 0,5 partie en masse d'acide gras saponifié en tant qu'agent de démoulage, et les fibres de verre HR devant être utilisées en tant que composant B) étant moulées par injection avec un polyamide 66 pour donner des barreaux plats selon la norme DIN EN ISO 180 1-U de taille nominale 80 mm • 10 mm • 4 mm et, après 1 000 h de stockage dans un autoclave à 130 °C/ca. 2 bars, dans un mélange 1 : 1 d'eau et d'éthylèneglycol, présentent une résistance aux chocs, à déterminer à 23 ± 2 °C d'après la norme ISO 180-1U, selon Izod, d'au moins 12 kJ/m².

13. Procédé selon la revendication 12, **caractérisé en ce que** les compositions présentent, immédiatement avant le traitement, une humidité résiduelle, à déterminer par la méthode Karl-Fischer selon la norme DIN EN ISO 15512, < 0,12 % en poids, par rapport à 100 % en poids du mélange final.

14. Procédé selon la revendication 13, **caractérisé en ce qu'**avant le moulage par injection, avant l'extrusion ou avant le moulage par soufflage, l'humidité résiduelle est < 0,12 % en poids.

15. Procédé selon l'une quelconque des revendications 12 à 14, **caractérisé en ce qu'**il s'agit de composants oscillants dans des véhicules automobiles, de préférence dans le compartiment moteur de véhicules automobiles dotés d'un moteur à combustion.
